(19) **Europäisches Patentamt**
**European Patent Office**
**Office européen des brevets**

(11) **EP 4 550 244 A2**

(12) **EUROPEAN PATENT APPLICATION**

(43) Date of publication:
07.05.2025 Bulletin 2025/19

(21) Application number: 25165788.8

(22) Date of filing: 13.12.2021

(51) International Patent Classification (IPC):
*G06Q 30/0241* (2023.01)

(52) Cooperative Patent Classification (CPC):
**H04L 9/0643; G06Q 10/101; G06Q 30/0241;**
**H04L 9/0841;** G06Q 2220/00

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: 14.12.2020 US 202063125191 P

(62) Document number(s) of the earlier application(s) in
accordance with Art. 76 EPC:
**21840745.0 / 4 066 199**

(71) Applicant: **GOOGLE LLC**
**Mountain View CA 94043 (US)**

(72) Inventor: **The designation of the inventor has not**
**yet been filed**

(74) Representative: **Marks & Clerk GST**
**1 New York Street**
**Manchester M1 4HD (GB)**

Remarks:
This application was filed on 24-03-2025 as a
divisional application to the application mentioned
under INID code 62.

(54) **FEEDBACK CONTROLLER USING SECRET SHARING**

(57) Computer-implemented methods and systems comprising, for each of one or more campaigns: initializing, by a first computing system of a plurality of multi-party computation (MPC) systems and in collaboration with one or more second computing systems of the MPC systems, a feedback controller for the campaign in secret shares using a secure MPC process. The feedback controller comprises a setpoint based on a target rate for the campaign. Each MPC system maintains parameters of the feedback controller in secret shares that encrypt the parameters. The parameters comprise a measured rate, an output parameter, and an error parameter. The first computing system updates, using a secure MPC protocol in collaboration with each of the one or more second computing systems, a first secret share of the output parameter of the feedback controller based on the error parameter representing a difference between the setpoint and the measured rate for the campaign. The first computing system determines, based at least on the first secret share of the output parameter, a first secret share of a pacing selector parameter that defines whether the campaign satisfies a pacing eligibility condition for the campaign. The first computing system receives a digital component request from a client device. The first computing system conducts, in collaboration with the one or more second computing systems, a given digital component selection process for the digital component request. The digital component selection process selects a given digital component from a set of candidate digital components that each satisfy one or more eligibility conditions including being in an eligible campaign that satisfies the pacing eligibility condition. The first computing system sends a first secret share of a selection result that identifies the given digital component to the client device.

FIG. 1

**Description**

TECHNICAL FIELD

This specification is related to cryptography and feedback controllers.

BACKGROUND

A feedback controller is a controller that monitors a process variable and generates an action based on a difference between the actual value of the process variable and a setpoint to drive the process variable to the same values as the setpoint. One type of feedback controller is a proportional-integral-derivative (PID) controller.

SUMMARY

In general, one innovative aspect of the subject matter described in this specification can be embodied in methods that include, for each of one or more campaigns: initializing, by a first computing system of multiple multi-party computation (MPC) systems and in collaboration with one or more second computing systems of the MPC systems, a feedback controller for the campaign in secret shares using a secure MPC process, wherein the feedback controller comprises a setpoint based on a target rate for the campaign; updating, by the first computing system, a first secret share of an output of the feedback controller based on an error parameter representing a difference between the setpoint and a measured rate for the campaign; and determining, by the first computing system and based at least on the first secret share of the output, a first secret share of a pacing selector parameter that defines whether the campaign satisfies a pacing eligibility condition for the campaign. The method includes receiving, by the first computing system a digital component request; conducting, by the first computing system in collaboration with the one or more second computing systems, a given digital component selection process for the digital component request, wherein the digital component selection process selects a given digital component from a set of candidate digital components that each satisfy one or more eligibility conditions including being in an eligible campaign that satisfies the pacing eligibility condition; and sending, by the first computing system and to the client device, a first secret share of a selection result that identifies the given digital component. Other implementations of this aspect include corresponding apparatus, systems, and computer programs, configured to perform the aspects of the methods, encoded on computer storage devices.

These and other implementations can each optionally include one or more of the following features. In some aspects, the target rate for the campaign includes one of a target impression rate for the campaign, a target user interaction rate for the given campaign, or a target resource depletion rate for the given campaign.

In some aspects, the feedback controller includes a proportional-integral-derivative (PID) controller. The digital component request can include secret shares of data identifying one or more first user groups that include a user of the client device as a member. Conducting, by the first computing system and in collaboration with the one or more second computing systems, the given digital component selection process for the digital component request can include identifying multiple digital components, wherein each digital component corresponds to (i) a respective selection value, (ii) a respective second user group identifier for a respective second user group to which the digital component is eligible to be distributed, and (iii) a respective campaign that includes the digital component; for each selection value, determining a first secret share of an overall candidate parameter that indicates whether (i) the second user group identifier corresponding to the selection value matches one of the one or more first user groups and (ii) the pacing selector parameter for the respective campaign indicates that the respective campaign satisfies the pacing eligibility condition for the respective campaign; and generating, based on the respective selection value for each of the multiple digital components and the candidate parameters, the first secret share of the selection result, wherein the given digital component is a particular digital component, from the set of eligible digital components, having a highest selection value.

In some aspects, each eligible digital component is a digital component for which the overall candidate parameter has a specified value, wherein the specified value indicates that (i) the second user group identifier corresponding to the digital component matches one of the one or more first user groups and that (ii) respective pacing selector parameter for the campaign that includes the digital component indicates that the campaign satisfies the pacing eligibility condition.

Generating the first secret share of the selection result can include generating an order of the multiple digital components based on a magnitude of each selection value; determining, based on the order of the digital components and the overall candidate parameter for each digital component, a first secret share of an accumulated value for each selection value; determining, for each digital component, a first secret share of a winner parameter based on (i) the overall candidate parameter for the selection value and (ii) a result of an equality test that indicates whether the accumulated value for the selection value is a particular specified value; and determining, as the first secret share of the selection result, a first secret share of a sum of, for each selection value, a product of the winner parameter for the selection value and a digital component information element for the selection value. Determining the first secret share of the accumulated value for each selection value can include, for each individual selection value, determining a quantity of selection values, between a highest selection value and the individual selection value inclusive, that have a candidate parameter that indicates that the second user group identifier corresponding to the selection value matches at least one of the one or more first user group identifiers. The particular specified value can be one or logical true.

Some aspects can include storing the first secret share of the winner parameter with a reference to a selection process identifier for the given digital component selection process; receiving a notification from the client device, the notification including the selection process identifier and a first secret share of data indicating at least one of (i) whether the given digital component was presented at the client device or (ii) whether a user interacted with the given digital component; and updating, using the selection process identifier and the first secret share of the data indicating at least one of (i) whether the digital component was presented at the client device or (ii) whether the user interacted with the given digital component, a first secret share of the measured rate for the feedback controller for campaign that includes the given digital component. Some aspects can include updating, in collaboration with the one or more second computing systems, the first secret share of the respective pacing selector parameter for the given campaign based on the updated first secret share of the measured rate and a respective second secret share of the measured rate maintained by each of the one or more second computing systems. Updating the first secret share of the respective pacing selector parameter for the given campaign can include updating, in collaboration with the one or more second computing systems, the first secret share of the output of the feedback controller for the given campaign and updating, in collaboration with the one or more second computing systems, the first secret share of the pacing selector for the given campaign based on the updated first secret share of the output of the feedback controller for the given campaign and a respective updated second secret share of the output of the feedback controller for the given campaign maintained by each of the one or more second computing systems.

The subject matter described in this specification can be implemented in particular embodiments so as to realize one or more of the following advantages. Using a secure MPC process performed by two or more MPC servers operated by different parties to select digital components based on secret shares of user information ensures that the user information cannot be accessed in cleartext by either MPC server or another party absent unauthorized collusion between the MPC servers.

In a digital component selection process, the MPC servers can select from eligible digital components that satisfy one or more eligibility conditions while preventing the parties from accessing user information in cleartext. The eligibility conditions can include restrictions and guidelines on the manner or frequency of distribution of a digital component, among other factors. The conditions can include user group membership, frequency control, muting, budget, k-anonymity, and/or pacing constraints.

A client device of a user can generate a probabilistic data structure, e.g., a cuckoo filter, that represents user groups that includes the user as a member. The client device can split the probabilistic data structure into two or more secret shares. Alternatively, the client device can generate distributed points functions, one per user group that includes the user as a member. The distributed point functions are secret shares that cryptographically represent whether the user is a member of a user group. Using probabilistic data structures and/or distributed point functions in this way protects user privacy by preventing access to the user's group membership and reduces the size of the information provided to the MPC cluster. This reduction in data size reduces the amount of bandwidth consumed to transmit the information, reduces the latency in transmitting the information, and reduces the amount of processing power and associated battery power for devices running on batteries (e.g., mobile devices) required to transmit the information.

The MPC cluster can transmit secret shares of a result that identifies a selected digital component that the MPC cluster selected using the secure MPC process. By sending secret shares of a result for only selected digital components rather than information for all or a large set of digital components similarly reduces consumed bandwidth, latency, processing power, and battery power in transmitting and receiving the result. This also reduces the potential leakage of confidential information of content platforms that submit selection values for digital components to the MPC cluster by limiting the number of digital components for which information is provided to the client device.

Feedback controllers, e.g., PID controllers, can be implemented using secret sharing to ensure a target pacing for digital components, e.g., such that the digital components of a campaign are distributed evenly or close thereto throughout a time period for the campaign. The target pacing can include uniform distribution of, uniform user interactions with, or uniform conversions resulting from viewing, the digital component over a given time period. The feedback controllers can also precisely control digital component distribution resources (e.g., budgets) precisely, while preventing others from accessing user information. The feedback controller also provides real time or near real time control over pacing and resource depletion, while providing the target privacy protections. The feedback controller of digital component distribution can hence remove redundant digital component distribution or distribution which would otherwise be too frequent, which saves network resources as well as associated transmission and reception resources.

Various features and advantages of the foregoing subject matter are described below with respect to the figures. Additional features and advantages are apparent from the subject matter described herein and the claims.

BRIEF DESCRIPTION OF THE DRAWINGS

FIG. 1 is a block diagram of an environment in which an MPC cluster performs a secure MPC process to select digital components for distribution to client devices.

FIG. 2 is a swim lane diagram of an example process for selecting a digital component for display at a client device.

FIG. 3 is a swim lane diagram of an example process for selecting a digital component for distribution to a client device.

FIG. 4 is a swim lane diagram that illustrates an example process for using a feedback controller to determine secret shares of a pacing selector parameter.

FIG. 5 is a flow diagram that illustrates an example process for selecting a digital component for distribution to a client device.

FIG. 6 is a block diagram of an example computer system.

Like reference numbers and designations in the various drawings indicate like elements.

DETAILED DESCRIPTION

In general, this document describes systems and techniques for pacing digital component distribution and controlling the use of digital component distribution rate using feedback controllers implemented using secret sharing. The control techniques described in this document can be used for other types of controllers for which information should be kept confidential. An MPC cluster of server computers can perform a secure MPC process to select digital components based on user information or signals derived from user information without either MPC server being able to access the user information or derived signals in cleartext absent unauthorized collusion. The user information can be sent to the MPC cluster using probabilistic data structures or distributed point functions to reduce the data size of the information being transmitted over a network and to keep the information secure during the transmission.

A feedback controller, e.g., a PID controller, implemented using secret sharing can be used to control when one or more digital components of a campaign satisfy an eligibility condition such that the digital components are eligible for distribution to client devices, e.g., assuming the digital components satisfy any other conditions placed on the digital components. The variable of the controller can be calculated and maintained by the MPC cluster in secret shares. The variable can be based on a number of impressions of the digital component(s), the number of user interactions with the digital component(s), or an amount of digital component distribution resources (e.g., budget) used for the campaign. For example, the variables can be an impression rate, an interaction rate, a conversion rate, and/or a resource depletion rate. The impression rate can be a rate at which the digital component(s) of the campaign are being displayed over a given time period. The interaction rate can be a rate at which the digital component(s) are being interacted with over a given time period. The conversion rate can be a rate at which conversions occur after the digital component(s) are displayed over a given time period. The resource depletion rate can be a rate at which digital component distribution resources for the campaign are used over a given time period. The controller can adjust the probability at which the digital component(s) are eligible for selection in response to digital component requests based on a difference between a setpoint and the actual rate for the variable.

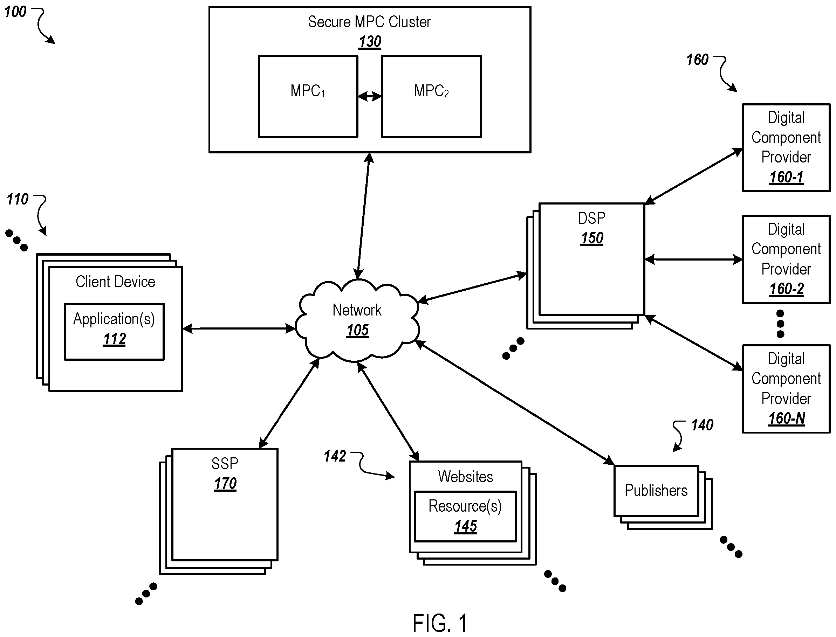

FIG. 1 is a block diagram of an environment 100 in which an MPC cluster performs a secure MPC process to select digital components for distribution to client devices 110. The example environment 100 includes a data communication network 105, such as a local area network (LAN), a wide area network (WAN), the Internet, a mobile network, or a combination thereof. The network 105 connects the client devices 110, the secure MPC cluster 130, publishers 140, websites 142, content platforms, e.g., supply-side platforms (SSPs) 170 and demand-side platforms DSPs (150). The example environment 100 may include many different client devices 110, secure MPC clusters 130, publishers 140, websites 142, DSPs 150, and SSPs 170.

A client device 110 is an electronic device that is capable of communicating over the network 105. Example client devices 110 include personal computers, mobile communication devices, e.g., smart phones, and other devices that can send and receive data over the network 105. A client device can also include a digital assistant device that accepts audio input through a microphone and outputs audio output through speakers. The digital assistant can be placed into listen mode (e.g., ready to accept audio input) when the digital assistant detects a "hotword" or "hotphrase" that activates the microphone to accept audio input. The digital assistant device can also include a camera and/or display to capture images and visually present information. The digital assistant can be implemented in different forms of hardware devices including, a wearable device (e.g., watch or glasses), a smart phone, a speaker device, a tablet device, or another hardware device. A client device can also include a digital media device, e.g., a streaming device that plugs into a television or other display to stream videos to the television, a gaming system, or a virtual reality system.

A client device 110 typically includes applications 112, such as web browsers and/or native applications, to facilitate the sending and receiving of data over the network 105. A native application is an application developed for a particular platform or a particular device (e.g., mobile devices having a particular operating system). Publishers 140 can develop and provide, e.g., make available for download, native applications to the client devices 110. A web browser can request a resource 145 from a web server that hosts a website 142 of a publisher 140, e.g., in response to the user of the client device 110 entering the resource address for the resource 145 in an address bar of the web browser or selecting a link that references the resource address. Similarly, a native application can request application content from a remote server of a publisher.

Some resources, application pages, or other application content can include digital component slots for displaying digital components with the resources 145 or application pages. As used throughout this document, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. For example, the digital component may be content that is intended to supplement content of a web page or other resource displayed by the application 112. More specifically, the digital component may include digital content that is relevant to the resource content (e.g., the digital component may relate to the same topic as the web page content, or to a related topic). The provision of digital components can thus supplement, and generally enhance, the web page or application content.

When the application 112 loads a resource (or application content) that includes one or more digital component slots, the application 112 can request a digital component for each slot. In some implementations, the digital component slot can include code (e.g., scripts) that cause the application 112 to request a digital component from a digital component distribution system that selects a digital component and provides the digital component to the application 112 for display to a user of the client device 110. As described below, the application 112 can request digital components from the MPC cluster 130 and/or one or more SSPs 170.

Some publishers 140 use an SSP 170 to manage the process of obtaining digital components for digital component slots of its resources and/or applications. An SSP 170 is a technology platform implemented in hardware and/or software that automates the process of obtaining digital components for the resources and/or applications. Each publisher 140 can have a corresponding SSP 170 or multiple SSPs 170. Some publishers 140 may use the same SSP 170.

Digital component providers 160 can create (or otherwise publish) digital components that are displayed in digital component slots of publisher's resources and applications. The digital component providers 160 can use a DSP 150 to manage the provisioning of its digital components for display in digital component slots. A DSP 150 is a technology platform implemented in hardware and/or software that automates the process of distributing digital components for display with the resources and/or applications. A DSP 150 can interact with multiple supply-side platforms SSPs on behalf of digital component providers 160 to provide digital components for display with the resources and/or applications of multiple different publishers 140. In general, a DSP 150 can receive requests for digital components (e.g., from an SSP), generate (or select) a selection value for one or more digital components created by one or more digital component providers based on the request, and provide data related to the digital component (e.g., the digital component itself) and the selection parameter to an SSP. The selection value can indicate an amount that the digital component provider 160 is willing to provide for display or user interaction with the digital component. The SSP can then select a digital component for display at a client device 110 and provide, to the client device 110, data that causes the client device 110 to display the digital component.

In some cases, it is beneficial to a user to receive digital components related to web pages, application pages, or other electronic resources previously visited and/or interacted with by the user. In order to distribute such digital components to users, the users can be assigned to user groups, e.g., user interest groups, cohorts of similar users, or other group types involving similar user data, when the users visit particular resources or perform particular actions at the resource (e.g., interact with a particular item displayed on a web page or add the item to a virtual cart). The user groups can be generated by the digital component providers 160. That is, each digital component provider 160 can assign users to their user groups when the users visit electronic resources of the digital component providers 160. The user groups can also be created by the content platforms, e.g., by DSPs 150 and/or SSPs 170.

To protect user privacy, a user's group membership can be maintained at the user's client device 110, e.g., by one of the applications 112, or the operating system of the client device 110, rather than by a digital component provider, content platform, or other party. In a particular example, a trusted program (e.g., a web browser or the operating system can maintain a list of user group identifiers ("user group list") for a user using the web browser or another application (e.g., for a user logged into the browser, application, or the client device 110). The user group list can include a group identifier for each user group that includes the user as a member. The digital component providers 160 that create the user groups can specify the user group identifiers for their user groups. The user group identifier for a user group can be descriptive of the group (e.g., gardening group) or a code that represents the group (e.g., an alphanumeric sequence that is not descriptive). The user group list for a user can be stored in secure storage at the client device 110 and/or can be encrypted when stored to prevent others from accessing the list.

When the application 112 displays a resource or application content related to a digital component provider 160, or a web page on a website 142, the resource can request that the application 112 add one or more user group identifiers to the user group list. In response, the application 112 can add the one or more user group identifiers to the user group list and store the user group list securely.

In some implementations, the MPC cluster 130 can use the user group membership of a user to select digital components or other content that may be of interest to the user or may be beneficial to the user/user device in another way. For example, such digital components or other content may include data that improves a user experience, improves the running of a user device or benefits the user or user device in some other way. However, the user group identifiers of the user group list of a user can be provided and used to select digital components in ways that prevent the computing systems $MPC_1$ and $MPC_2$ of the MPC cluster 130 from accessing the user group identifiers for the user in cleartext, thereby preserving user privacy when using user group membership data to select digital components. Cleartext is text that is not computationally tagged, specially formatted, or written in code, or data, including binary files, in a form that can be viewed or used without requiring a key or other decryption device, or other decryption process.

The secure MPC cluster 130 includes two computing systems $MPC_1$ and $MPC_2$ (e.g., server computers) that perform secure MPC processes to select digital components for distribution to client devices of users based on the user's group membership, but without accessing the group membership or other user information, or signals derived from such user information, in cleartext. Although the example MPC cluster 130 includes two computing systems, more computing systems can also be used as long as the MPC cluster 130 includes more than one computing system. For example, the MPC cluster 130 can include three computing systems, four computing systems, or another appropriate number of computing systems. Using more computing systems in the MPC cluster 130 can provide more security, but can also increase the complexity of the MPC processes.

The computing systems $MPC_1$ and $MPC_2$ can be operated by different entities. In this way, each entity may not have access to the users' group membership, or other user information, or signals derived from such user information, in cleartext. For example, one of the computing systems $MPC_1$ or $MPC_2$ can be operated by a trusted party different from the users, the publishers 140, the DSPs 150, the SSPs 170, and the digital component providers 160. For example, an industry group, governmental group, or browser developer may maintain and operate one of the computing systems $MPC_1$ and $MPC_2$. The other computing system may be operated by a different one of these groups, such that a different trusted party operates each computing system $MPC_1$ and $MPC_2$. Preferably, the different parties operating the different computing systems $MPC_1$ and $MPC_2$ have no incentive to collude to endanger user privacy. In some implementations, the computing systems $MPC_1$ and $MPC_2$ are separated architecturally and are monitored to not communicate with each other outside of performing the secure MPC processes described in this document.

Each computing system $MPC_1$ and $MPC_2$ can store selection values (and other information) for digital components. For example, the computing systems $MPC_1$ and $MPC_2$ can cache selection values previously received from SSPs 170 and/or DSPs 150 as part of previous digital component selection processes. In this way, the MPC cluster 130 can use the selection values to select digital components for distribution to client devices 110 in response to future user group-based digital component requests received from client devices 110.

In the example that follows, each digital component has a user group-based condition that defines that the digital component and its selection value is only eligible for digital component selection processes in which a digital component is being selected for users that are members of a particular group. In addition, or in the alternative, each digital component can be associated with other conditions, e.g., a frequency control condition that prevents the same user from being exposed to the same digital component more than a specified number of times within a period of time, a muted condition that prevents the digital component from being displayed to a user that has selected to mute, a k-anonymity condition, and/or pacing conditions described in more detail below.

In some implementations, each computing system $MPC_1$ and $MPC_2$ stores the selection values for digital components using a two stage lookup table (LUT). Using a two stage LUT can provide some performance advantages, but other appropriate data structures can also be used. The first stage can be keyed by a user group request key (*UG_Request_Key*). The *UG_Request_Key* can be a composite message that is based on a set of contextual signals, e.g., a set of contextual signals of a digital component request (e.g., URL, location, language, etc.) or a set of contextual signals for which a digital component is eligible for distribution. That is, the first stage LUT can be keyed based on a set of contextual signals. The key for the first stage can be a hash of the *UG_Request_Key*, e.g., using a hash function such as SHA256. This key can be truncated to a specified number of bits, e.g., to 16 bits, 32 bits, or another appropriate number of bits. The value for each key *UG_Request_Key* in the first stage LUT can indicate the rows of the second stage LUT that includes data for digital components that are eligible for digital component requests that include the contextual signals of the *UG_Request_Key.* An example first stage LUT is shown below as Table 1.

Table 1

| Key | Value |
|---|---|
| *SHA256*(*UG_Request_Key*) | Rows ... |
| ... | Rows... |

The second stage LUT can be keyed based on a combination of the user group request key *UG_Request_Key* in the first stage LUT and a user group identifier. Each row in the second stage LUT can be for a particular selection value for a particular digital component. For example, a DSP 150 can submit different selection values for the same digital component, with each selection value being for a different set of contextual signals and/or different user group identifiers. Thus, the selection values for a digital component can vary based on context and other factors.

A DSP 150 or digital component provider 160 can associate, e.g., link or map, a digital component to a user group to which the DSP 150 or digital component provider wants the digital component to be displayed. For example, a DSP 150 may want a digital component related to men's basketball shoes to be displayed to men that have shown an interest in basketball and/or shoes. In this example, the DSP 150 can provide, to the MPC cluster 130, data indicating that the digital component corresponds to the user group identifier for a user group that includes men that have shown an interest in basketball and/or shoes.

In some implementations, the key for a row in the second stage LUT can be a hash or code generated based on the combination of the user group request key *UG_Request_Key* and the user group identifier for the digital component of the row. For example, the key can be a hash-based message authentication code (HMAC) of the combination, which can be represented as $HMAC_{SHA256}$(*UG_Request_Key*, *ug_id*). The user group identifier *ug_id* can be based on a combination of an internal user group identifier for the user group and a domain of the owner of the user group (e.g., of the DSP, SSP, or digital component provider that owns the user group). For example, the user group identifier *ug_id* can be a digital digest of the eTLD+1 of the owner domain and the owner's internal user group identifier for the user group. The eTLD+1 is the effective top-level domain (eTLD) plus one level more than the public suffix. An example eTLD+1 is "example.com" where ".com" is the top-level domain. The *ug_id* can be truncated to 16 bytes or another appropriate data size.

Continuing the previous men's basketball shoes example, the second stage lookup key for the row that includes information for the digital component that is to be displayed to users in the men's basketball shoes group can be a combination of the user group request key *UG_Request_Key* and the user group identifier *ug_id* for the men's basketball shoes group. As the digital component can be displayed in different contexts, the second stage lookup table can include multiple rows for the digital component the user group identifier *ug_id* for the men's basketball shoes group, each with different user group request key *UG_Request_Key* and different values.

The value for each row of the second stage LUT can be the selection value for the digital component and other data for the digital component, e.g., metadata that identifies the digital component or the network location from which the digital component can be downloaded, etc.

The value can be a digital component information element *de_information_element,* which can be a byte array having the selection value and the metadata. The byte array can have a particular format that applications 112 or trusted programs of client devices 110, and the computing systems $MPC_1$ and $MPC_2$ can parse to obtain the selection value and metadata. An example second stage LUT is shown below as Table 2.

Table 2

| Key | Value |
|---|---|
| *HAMC*(*UG_Request_Key*, *UG_ID*) | {selection value, metadata} |
| ... | ... |

The second stage LUT maps a selection value to a particular digital component, to a particular user group identifier *ug_id,* and to a particular set of contextual signals defined by the first stage lookup key *UG_Request_Key.* By doing so, the second stage LUT indicates the particular context of a digital component slot for which the selection value for the digital component is eligible. This allows a DSP 150 or digital component provider 160 to specify different selection values for the same digital component for different contexts defined by the contextual signals and a user's group membership. When a digital component request is received that indicates that the user to which the digital component will be displayed is a member of a particular user group identified by a particular user group identifier *ug_ig* and the digital component will be displayed in a particular context defined by the contextual signals of the first stage lookup key, any selection values in the second stage LUT that has a matching user group identifier and a matching first stage lookup key is a candidate for being selected for distribution in response to the request. Although a two stage LUT is used in this example, other appropriate data structures can also be used.

A DSP 150 or a digital component provider 160 can launch one or more campaigns for a user group. For example, a DSP 150 can launch, for a shoe manufacturer, a campaign for promoting a particular brand of shoes to a particular user group. To promote the campaign, the DSP 150 can provide one or more digital components that are related, e.g., contextually related, to the particular brand of shoes. In such scenarios, each campaign can be identified with a unique identifier (referred to as a campaign identifier) that distinguishes the campaign from other campaigns of the DSP 150. As part of the campaign, the digital components can be provided to users that are members of the particular user group. User groups and campaigns can have a *m:n* relationship such that one user group can be associated with multiple campaigns *n* and one campaign can be delivered against multiple user groups *m*. The DSP 150 or digital component provider 160 can include, in the metadata for a selection value and corresponding digital component, one or more campaign identifiers for the campaign(s) for which the selection value and digital component is eligible for selection by the MPC cluster 130.

The metadata for each stored selection value for a digital component that is part of a campaign can include a universal campaign identifier *universal_campaign_id* for the campaign. The universal campaign identifier *universal_campaign_id* can represent a source of the digital component. For example, the universal campaign identifier *universal_campaign_id* can uniquely represent an entity that provided the selection value for the digital component (e.g., a DSP 150 or digital component provider 160) and/or a specific digital component group (e.g., campaign) that triggered transmission of the digital component to a client device 110. In some implementations, the universal campaign identifier *universal_campaign_id* for a digital component can be calculated using an HMAC parameterized by a campaign identifier (e.g., an internal campaign identifier of the entity that provided the selection value) and a domain of the entity represented as *HMAC(campaign_identifier, domain)*. In some implementations, the HMAC can be implemented using a secure hash algorithm (SHA-256) which is a cryptographic hash function with a digest length of 256 bits to generate a hashed 256 bit (32 byte) output. In such an example, *HMAC(campaign identifier, domain)* generates, as the universal campaign identifier, a 256 bit unique identifier for the digital component. The domain of the entity can be the eTLD+1 for the domain. Using a universal campaign identifier rather than an internal campaign identifier prevents malicious parties from disrupting other DSPs' pacing and digital component distribution resource utilization processes. For example, using a digital digest in this manner prevents a malicious party from submitting setpoints, selection values, etc. for legitimate campaigns.

Each selection value and corresponding digital component that is part of one or more campaigns for one or more user groups can be associated with a user group identifier-universal campaign identifier pair for each campaign. This pair can be represented as {*ug_id*, *universal_campaign_id*}, which represents the user group identifier *ug_id* for the user group and the universal campaign identifier *universal_campaign_id* for the campaign. This pair can be part of the metadata for the selection value stored in the second stage LUT above.

The MPC cluster 130 can use a feedback controller for a campaign to manage the rate at which digital components of the campaign are provided for display at client devices 110. In some implementations, the MPC cluster 130 uses a PID controller to manage the rate at which the digital components are provided. The controller can be implemented using secret sharing to prevent the computing systems $MPC_1$ and $MPC_2$ or other entities from obtaining user information, e.g., user group membership information, in cleartext. For example, granular resources spent, impressions delivered, and/or clicks/conversion data may enable the computing systems $MPC_1$ and $MPC_2$ to infer a user's group membership data if not protected using secret sharing.

As described in more detail below, the MPC cluster 130 can receive tuning parameters, setpoints, and digital component distribution resource (e.g.. budget) information for a campaign from the campaign owner (e.g., the DSP 150 or digital component provider 160). Some or all of this data can be received as secret shares. The MPC cluster 130 can initialize the PID controller based on this data and update the output of the controller in a recurring manner, e.g., periodically, based on updated variables, e.g., impression rates, interaction rates, etc. The MPC cluster 130 can use the output to set a boolean pacing selector parameter *pacing_selector* in secret shares that defines whether the campaign satisfies a pacing eligibility condition for the campaign. If so, the digital component(s) included in the campaign also satisfy the pacing eligibility condition. If a digital component satisfies all conditions on the digital component, including the pacing eligibility condition, the digital component is an eligible digital component that is eligible for inclusion in a digital component selection process.

By adjusting the value of this pacing selector parameter *pacing_selector* based on updates to the process variable, the MPC cluster 130 can control the rate at which digital components of the campaign are distributed, e.g., to ensure that the digital components are distributed evenly during a campaign time period and/or to ensure that the digital component distribution resources are not exhausted too early in the campaign time period. As described in more detail below, this pacing selector parameter *pacing_selector* can be used in combination with another parameter (*is_dc_a_candidate*) that defines whether a digital component and its corresponding selection value are eligible based on one or more other conditions, e.g., whether the user group associated with the selection value matches a user group of the user to which the digital component will be provided; whether the digital component satisfies a frequency control condition that prevents the same user from being exposed to the same digital component more than a specified number of times within a period of time; whether the digital component satisfies a muted condition that prevents the digital component from being displayed to a user that has selected to mute; and/or whether the digital components satisfies a k-anonymity condition.

Further to the descriptions throughout this document, a user may be provided with controls (e.g., user interface elements with which a user can interact) allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

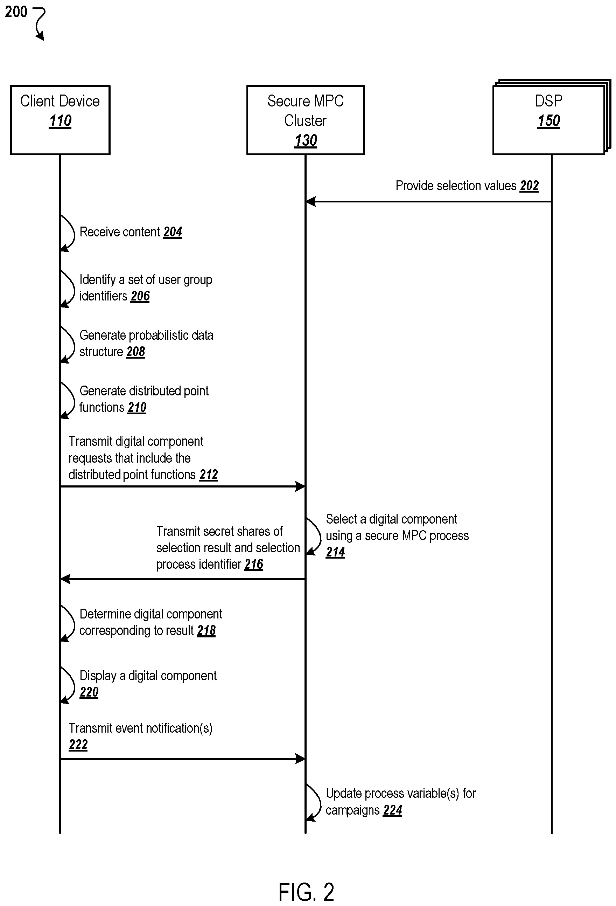

FIG. 2 is a swim lane diagram of an example process 200 for selecting a digital component for display at a client device. Operations of the process 200 can be implemented, for example, by the client device 110, the computing systems $MPC_1$ and $MPC_2$ of the MPC cluster 130, and DSPs 150. Operations of the process 200 can also be implemented as instructions stored on one or more computer readable media which may be non-transitory, and execution of the instructions by one or more data processing apparatus can cause the one or more data processing apparatus to perform the operations of the process 200. Although the process 200 and other processes below are described in terms of a two computing system MPC cluster 130, MPC clusters having more than two computing systems can also be used to perform similar processes. In addition, operations of the process 200 can be implemented by SSPs 170.

The DSPs 150 provide selection values as well as selection criteria for digital components to the MPC cluster 130 (202). In some implementations, the DSPs 150 provide the selection values and selection criteria to the MPC cluster 130 via the SSP (not shown in FIG. 2 for brevity). As described above, the selection value can indicate an amount that the digital component provider 160 is willing to provide for display or user interaction with the digital component. The MPC cluster 130 can store the selection values and selection criteria for future digital component requests received from client devices 110. For each digital component, a DSP 150 can also upload additional data, e.g., metadata, for the digital component. The additional data (or selection criteria) for a digital component can include one or more conditions that the digital component must satisfy in order to be included in a digital component selection process. For example, the additional data can include a user group identifier for a user group corresponding to the digital component and/or a campaign identifier for each of zero or more campaigns that include the digital component. For example, the DSP 150 can manage a campaign in which the digital component is distributed to client devices 110 of users that are members of the user group. As described above, the metadata for the digital component can include a {*ug_id*,*universal_campaign_id* } pair.

The data for a digital component can include contextual selection signals that indicate the context for which the digital component is eligible, e.g., location of client device 110, spoken language selected for the application 112, Universal Resource Locators (URL) for resources with which the digital component can be displayed and/or excluded URLs for resources with which the digital component cannot be displayed. This data for a digital component can also identify the digital component, e.g., using a unique identifier, a domain from which the digital component can be obtained, and/or other appropriate data for the digital component.

In some implementations, the MPC cluster 130 caches, or otherwise stores, selection values, selection criteria and other metadata for digital components provided to the MPC cluster 130 for digital component requests. In this example, the contextual signals for the digital component and the selection value can include the contextual signals included in that digital component request. As described above, the selection values and metadata can be stored in a two stage LUT.

The client device 110 receives content (204). For example, the client device 110 can receive an electronic resource (e.g., web page) for display by a web browser or application content for display by a native application. The content can include one or more digital component slots that include computer-readable code, e.g., scripts, that, when executed, cause the client device 110 to request a digital component for each slot. The client device 110 can render the content on a display of the client device 110.

The client device 110 identifies a set of user group identifiers (206). The set of user group identifiers can be the user group identifiers for the user groups that include the user as a member. For example, the set of user group identifiers can be the user group identifiers in the user group list. The application 112 that renders the content or a trusted program can identify the set of user group identifiers, e.g., by accessing the user group list from secure storage of the client device 110.

The client device 110 generates a probabilistic data structure (208). The application 112 or the trusted program can generate the probabilistic data structure using the set of user group identifiers. In some implementations, the probabilistic data structure is a cuckoo filter. For example, the client device 110 can generate a cuckoo filter with tables using two hash functions $F_1$ and $F_2$. Cuckoo hashing is a hashing method that uses two (or more) tables with a total (1+\epsilon)N entries to store N items, e.g., user group identifiers, such that each entry will contain at most one item. In addition, each item, e.g., user group identifier, will appear in one of two entries defined by one of two hash functions $F_1$ and $F_2$ whose output is the set [(1+\epsilon)N]. An item associated with key k will appear at either location $F_1(k)$ in the first table or $F_2(k)$ in the second table. For reasonably large N items (e.g., N ≥ 100), it is sufficient to use \epsilon = 0.1, which means that N items can be hashed with cuckoo hashing where the combined table size is 1.1N. In these expressions, epsilon can be referred to as a load factor.

To build a sparse private information retrieval data structure using a cuckoo filter, up to N user group identifiers can be hashed using cuckoo hashing into two (or more) tables, which can have a combined size of 1.1N or another appropriate size. All empty entries can be replaced with a 0-bit string. To query for an user group identifier with key $k$, the user group identifier (if it exists in the data structure) will appear at entry $F_1(k)$ in the first table or $F_2(k)$ in the second table. Using table size $C$ = 1.1N would result in $1 \le F_1(ug\_id)$, $F_2(ug\_id) \le C$.

The client device 110 can generate the cuckoo filter by calculating, for each user group identifier in the set of user group identifiers, both possible locations for the user group identifier using both hash functions $F_1$ and $F_2$. If at least one of the two possible locations is empty, the client device 110 can insert the element into the empty location, which could be in either table, to complete the insertion process for that user group identifier. If both locations are occupied, the client device 110 randomly picks one location and swaps the item currently in the location with the item to be inserted. The client device 110 can then recalculate the two hash functions $F_1$ and $F_2$ and try the insertion again. This process repeats until the insertion is successful or too many attempts have failed for each user group identifier in the set of user group identifiers. After the cuckoo filter is constructed, each user group identifier $ug\_id$ is stored in a specific index of the table.

In this example, the client device 110 generates distributed point functions to transmit the list of user group identifiers to the MPC cluster 130. This can ensure data security, user privacy, and reduce the data size of the transmission. In other examples, the cuckoo filter or secret shares of the cuckoo filter can be provided to the MPC cluster 130, as described below.

The client device 110 generates distributed point functions (210). The application 112 or the trusted program can generate the distributed point functions using point functions, one for each user group that includes the user as a member. The distributed point functions represent secret shares of the point function. In general, point functions are functions $f^i$: $[N] \rightarrow [N]$ where $f(x) = 0$ when $x \mathrel{!=} i$ and $f(i) = 1$. A secret sharing of a point function $f^i$ is two functions $g^i$: $[N] \rightarrow [N]$ and $h^i$: $[N] \rightarrow [N]$ such that $f^i(x) = g^i(x) + h^i(x)$ for all x in the set [N]. Furthermore, given specifications of the function $h^i$ or $g^i$ (but not both), it is impossible to recover the original function $f^i$.

For each $ug\_id$, a point function $G_{ug\_id}$ is needed that can be split into distributed point functions $g_{ug\_id,1}$ and $g_{ug\_id,2}$ such that, for $\forall j \in [1, C]$, relationships 1 and 2 below are satisfied.

$$G_{ug\_id}(i) = g_{ug\_id,1}(i) + g_{ug\_id,2}(i) = ug\_id \text{ if } i = F_1(ug\_id) \tag{1}$$

$$G_{ug\_id}(i) = g_{ug\_id,1}(i) + g_{ug\_id,2}(i) = 0 \text{ otherwise} \tag{2}$$

Similarly, a point function $H_{ug\_id}$ is needed that can be split into distributed point functions $h_{ug\_id,1}$ and $h_{ug\_id,2}$ such that, for $\forall j \in [1, C]$, relationships 3 and 4 below are satisfied.

$$H_{ug\_id}(i) = h_{ug\_id,1}(i) + h_{ug\_id,2}(i) = ug\_id \text{ if } i = F_2(ug\_id) \tag{3}$$

$$H_{ug\_id}(i) = h_{ug\_id,1}(i) + h_{ug\_id,2}(i) = 0 \text{ otherwise} \tag{4}$$

That is, the distributed point functions of a particular point function can be evaluated on multiple possible points, e.g., multiple possible user group identifiers, but the result is always zero except for the user group identifier $ug\_id$ for the user group that includes the user as a member and for which the distributed point functions were generated. The distributed point functions have a very small data size that can be transmitted over a network without using much bandwidth and with low latency compared with sending other encrypted forms of user group identifiers.

For a given user group identifier, $ug\_id$, point function $F_1$ and the corresponding first table of the cuckoo filter, the client device 110 generates a distributed point function $g_{ug\_id,1}$ for computing system MPC$_1$ and a distributed function $g_{ug\_id,2}$ for computing system MPC$_2$. Similarly, for a given user group identifier, $ug\_id$, point function $F_2$ and the corresponding second table of the cuckoo filter, the client device 110 generates a distributed point function $h_{ug\_id,1}$ for computing system MPC$_1$ and a distributed point function $h_{ug\_id,2}$ for computing system MPC$_2$.

The client device 110 transmits, to the MPC cluster 130, a digital component request that includes the distributed point functions (212). The client device 110 can transmit a digital component request that includes each distributed point function $g_{ug\_id,1}$ and each distributed point function $h_{ug\_id,1}$ to computing system MPC$_1$. The digital component request can include the first stage lookup key, e.g., *SHA256*(*UG_Request_Key*). The client device 110 can generate the first stage lookup key based on contextual signals for the digital component request. For example, the client device 110 can generate the first stage lookup key by generating a composite message that includes contextual signals, such as the URL of the resource with which a selected digital component will be displayed, the location of the client device 110 submitting the digital component request, the spoken language of the application 112 that will display a selected digital component, etc. The client device 110 can then apply a hash function, e.g., an *SHA256* function, to the composite message to generate the first stage lookup key.

Similarly, the client device 110 can transmit a digital component request that includes each distributed point function $g_{ug\_id,\,2}$ and each distributed point function $h_{ug\_id,\,2}$ to computing system MPC$_2$. This digital component request can also include the first stage lookup key, e.g., *SHA256*(*UG_Request_Key*). As the contextual signals are the same, the first stage lookup key can be the same for the digital component requests sent to the two computing systems MPC$_1$ and MPC$_2$ of the MPC cluster 130.

The computing system MPC$_1$ can create a vector of additive secret shares $[M_1] = [m_{1,\,1}, \dots m_{C,\,1}]$, where $m_{i,1} = \Sigma_{ug\_id} g_{ug\_id,1}(i)$ for $1 \le i \le C$. Brackets are used in this document to represent secret shares of a secret. Similarly, computing system MPC$_2$ can create a vector of additive secret shares $[M_2] = [m_{1,2}, \dots m_{C,2}]$, where $m_{i,2} = \Sigma_{ug\_id} g_{ug-id,2}(i)$ for $1 \le i \le C$. In this example, secret share $[m_{i,\,1}]$ and $[m_{i,\,2}]$ are additive secret shares of $G_{ug\_id}(i)$ and $[M_1]$ and $[M_2]$ are two additive secret shared of $M$, i.e., vector of dimension $C$, where $M_i = G_{ug\_id}(i)$. The secret shares can be generated using Shamir's secret sharing or another appropriate secret sharing technique. The computing systems MPC$_1$ and MPC$_2$ can generate similar vectors for the point functions $h_{ug\_id,\,1}(i)$ and $h_{ug\_id,\,1}(i)$.

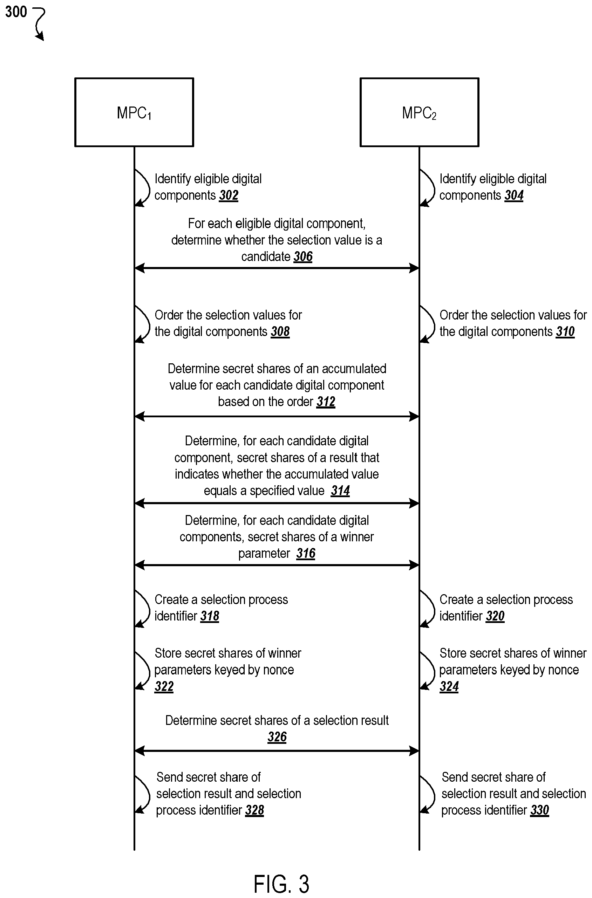

The MPC cluster 130 performs a secure MPC process using the distributed point functions to select a digital component based on the user groups that includes the user of the client device 110 as a member (214). This can include identifying a set of digital components and their corresponding selection values that are eligible for the digital component selection process based on context, e.g., using the first stage lookup key. This can also include identifying, from the set of digital components, eligible digital components that are candidates for selection based on one or more conditions for each digital component, e.g., based on (i) the digital components having a user group identifier that matches one of the user group identifiers for the user and (ii) the pacing selector parameter *pacing_selector* having a specified value, e.g., a value of one. This can also include selecting a digital component from the candidate digital components based on the selection values for the digital components. This can all be performed without either computing system MPC$_1$ or MPC$_2$ from accessing the user group identifiers in cleartext. An example process for selecting a digital component using a secure MPC process is illustrated in FIG. 3 and described below.

The MPC cluster 130 transmits a selection process identifier and secret shares of a selection result to the client device 110 (216). The selection process identifier can uniquely identify the digital component selection process for which the selection result was generated. For example, the computing systems MPC$_1$ and MPC$_2$ can each generate a respective selection process identifier *SPID* for each digital component request for which the computing systems MPC$_1$ and MPC$_2$ perform a selection process to generate a selection result to provide to a client device 110. As described in more detail below, the selection process identifier *SPID* can be a nonce.

The MPC cluster 130 can also store data for the selection values that were part of the selection process keyed by, or otherwise linked to, the *SPIDs.* For example, computing system MPC$_1$ can store a table or other data structure that includes data for the selection values with a key that is based on the *SPID$_1$* generated by computing system MPC$_1$ for the selection process. Similarly, computing system MPC$_2$ can store a table or other data structure that includes data for the selection values with a key that is based on the *SPID$_2$* generated by computing system MPC$_2$ for the selection process. This enables the MPC cluster 130 to update the process variables for the campaigns based on data received from the client device 110, as described in more detail below.

The selection result can be in the form of a byte array that includes information about the selected digital component. For example, the selection result can be a byte array that includes the value for the digital component in the second LUT, e.g., the selection value for the digital component and the metadata for the digital component. The computing systems MPC$_1$ and MPC$_2$ can determine, using the secure MPC process, the secret shares of the selection result, as described in more detail below. The computing system MPC$_1$ can transmit a first secret share of the selection result to the client device 110 and the computing system MPC$_2$ can send a second secret share of the selection result to the client device 110. To prevent the computing systems MPC$_1$ and MPC$_2$ knowing the selected digital component, the computing systems MPC$_1$ and MPC$_2$ can be prevented from sharing their secret shares of the selection result with each other.

When a two table cuckoo filter is used, the MPC cluster 130 can provide secret shares of two selection results, one for each table. However, retrieving two user group list selection values for two digital components facilitates selection value scrapping. To reduce this risk, the MPC cluster 130 can use another secure MPC technique to return at most one selection result with the highest selection value, as described below.

The client device 110 determines a digital component that corresponds to the selection result(s) (218). For each selection result for which the client device 110 receives two secret shares from the computing systems MPC$_1$ and MPC$_2$, the client device 110 can determine the selection result from the two secret shares. For example, using an additive secret share library as described in more detail below, the client device 110 can add the two secret shares of the selection result together to obtain the selection result in cleartext. This gives the client device 110 access to the selection value for the digital component and the metadata for the digital component, e.g., the identity of the digital component, the location from which the client device 110 can download the digital component, etc.

The client device 110 can display a digital component (220). For example, the application 112 can display the digital component with the content received in step 204. In some implementations, the client device 110 can display the digital component of the selection result. If two selection results are received, the client device 110 (e.g., the application 112) can select the digital component having the highest selection value and display the selected digital component.

In some implementations, the client device 110 can request a digital component based on user group membership from the MPC cluster 130. The client device 110 can also request digital components based on contextual signals from an SSP 170. These contextual signals can include the same contextual signals described above, and optionally additional contextual signals such as the number of digital component slots of the resource, the types of digital component slots, the types and/or format of digital components that can be displayed with the resource, etc. The SSP 170 can select one or more digital components based on the contextual signals and selection values for the digital components and provide one or more of the selected digital components (or data identifying the digital components) and the selection values for the digital component(s) to the client device 110. The client device 110 can then select, from a set of digital components that include the digital component of the selection result received from the MPC cluster 130 and the digital component(s) selected by the SSP 170, a digital component to display with the resource.

If a resource includes multiple digital component slots, the client device 110 can request a respective digital component for each slot from the MPC cluster 130 and from the SSP 170. To reduce consumed bandwidth and latency, the client device 110 can transmit the distributed point functions for the user once for all of the digital component slots.

The client device 110 can transmit one or more event notifications to the MPC cluster 130 (222). For example, assuming that a digital component of selection result received from the MPC cluster 130 is displayed by the application 112 of the client device 110, the application 112 can transmit an impression notification for a digital component in response to displaying the digital component. In another example, the application 112 can transmit a user interaction notification in response to detecting user interaction, e.g., a selection/click of the digital component.

For user interaction notifications, the application 112 can generate secret shares of a clicked parameter *clicked* that is a boolean parameter that can have a value of one if the user interacted with the digital component of a value of zero if the user did not interact with the digital component within a specified duration of time after the digital component was displayed. Thus, in this example, either value indicates that the digital component was displayed, but a value of one can indicate that the user interacted with the digital component. The application 112 can send, to computer system $MPC_1$, a first notification that includes the $SPID_1$ received from computing system $MPC_1$ and a first secret share [$clicked_1$] of the clicked parameter. Similarly, the application 112 can send, to computer system $MPC_2$, a first notification that includes the $SPID_2$ received from computing system $MPC_2$ and a second secret share [$clicked_2$] of the clicked parameter. In another example, the notification can separately indicate whether the digital component was displayed at the client device 110, e.g., using secret shares similar to the clicked parameter clicked.

The MPC cluster 130 updates the process variable(s) for the campaign to which the digital component selected by MPC cluster 130 belongs (224). For example, computing system $MPC_1$ can use the $SPID_1$ to obtain the stored data for the selection process and computing system $MPC_2$ can use the $SPID_2$ to obtain the stored data for the selection process. The MPC cluster 130 can then perform a secure MPC process to update the process variables (e.g., impression rate, interaction rate, conversion rate, and/or resource depletion rate) for the campaign of the digital component that was displayed by the application 112, as described in more detail below.

Although the steps for generating the cuckoo filter and the distributed point functions are shown in FIG. 2 as being performed after receiving content, the client device 110 can generate the cuckoo filter and the distributed point functions prior to receiving the content. For example, the client device 110 can generate and cache the cuckoo filter and distributed point functions periodically or in response to the user group membership for the user being updated.

FIG. 3 is a swim lane diagram of an example process 300 for selecting a digital component for distribution to a client device. Operations of the process 300 can be implemented, for example, by the computing systems $MPC_1$ and $MPC_2$ of the MPC cluster 130. Operations of the process 300 can also be implemented as instructions stored on one or more computer readable media which may be non-transitory, and execution of the instructions by one or more data processing apparatus can cause the one or more data processing apparatus to perform the operations of the process 300.

The computing system $MPC_1$ identifies eligible digital components and their corresponding selection values (302). The computing system $MPC_1$ can identify eligible digital components for a digital component request received from a client device 110, e.g., as described above with reference to FIG. 2. The digital component request can include, for each user interface group that includes the user of the client device as a member, the distributed point function $g_{ug\_id, 1}$ generated by the client device 110 for the user interface group identifier *ug_id* using the hash function $F_1$. If a two table cuckoo filter is used, the digital component request can also include the distributed point function $h_{ug\_id, 1}$ generated by the client device 110 for the user interface group identifier *ug_id* using the hash function $F_2$. The digital component request can also include the first stage lookup key, e.g., *SHA256(UG_Request_Key)*, generated based on the contextual signals for the digital component request.

The computing system $MPC_1$ can identify the eligible digital components using the first stage lookup key of the digital component request. The computing system $MPC_1$ can access the first stage LUT and use the first stage lookup key to identify the rows of the second stage LUT that include information for digital components that are eligible to be displayed, e.g., for which a selection value has been received, for the set of contextual signals represented by the first stage lookup key. For example, as described above, each row of the second stage LUT includes information for a digital component and a second stage lookup key that is based on a set of contextual signals. Thus, the computing system $MPC_1$ can use the first stage lookup key to identify rows of the second stage LUT that have a set of contextual signals that match the set of contextual signals defined by the first stage lookup key received in the digital component request. These rows include information for digital components that are eligible to be displayed or have eligible selection values for the context defined by the first stage lookup key received in the digital component request.

The computing system $MPC_2$ identifies eligible digital components and their corresponding selection values (304). The computing system $MPC_2$ can identify eligible digital components for a digital component request received from a client device 110. This digital component request can include, for each user interface group that includes the user of the client device as a member, the distributed point function $g_{ug\_id, 2}$ generated by the client device 110 for the user interface group identifier *ug_id* using the hash function $F_1$. If a two table cuckoo filter is used, the digital component request can also include the distributed point function $h_{ug\_id, 2}$ generated by the client device 110 for the user interface group identifier *ug_id* using the hash function $F_2$. The digital component request can also include the first stage lookup key, e.g., *SHA256(UG_Request_Key)*, generated based on the contextual signals for the digital component request.

The first stage lookup key of the digital component requests received by computing system $MPC_2$ can be the same as the first stage lookup key received by computing system $MPC_1$. Each distributed point function $g_{ug\_id, 2}$ can be generated based on the same distributed point function $G_{ud\_id}$ as a corresponding distributed point function received by computing system $MPC_1$. That is, for a user group identifier *ud_id* for a user group that includes the user as a member, the client device 110 can generate the distributed functions $g_{ug\_id, 1}$ and $g_{ug\_id, 2}$ of the digital component requests using the hash function $F_1$. Similarly, for a user group identifier *ud_id* for a user group that includes the user as a member, the client device 110 can generate the distributed functions $h_{ug\_id, 1}$ and $h_{ug\_id, 2}$ of the digital component requests using the hash function $F_2$.

For brevity, the remaining steps of the process 300 are described in terms of selecting a digital component for distribution to the client device 110 in response to a digital component request in terms of the distributed point functions for the hash function $F_1$. However, the same steps can be performed for the distributed point functions for the hash function $F_2$. This can result in two selected digital components and the MPC cluster 130 can perform additional operations to select one of the two digital components, as described below.

The computing system $MPC_2$ can identify the eligible selection values using the first stage lookup key of the digital component request. The computing system $MPC_2$ can access the first stage LUT and use the first stage lookup key to identify the rows of the second stage LUT that include information for a digital component that is eligible to be displayed, e.g., for which a selection value has been received, for the set of contextual signals represented by the first stage lookup key. As described above, each computing system $MPC_1$ and $MPC_2$ can maintain a respective two stage LUT that includes the same information.

For each eligible digital component, the computing systems $MPC_1$ and $MPC_2$ determine whether the digital component and its selection value is a candidate for being selected for distribution to the client device 110 in response to the digital component request (306). The candidate digital component are the eligible digital components that satisfy the one or more conditions for the digital component. In this example, a candidate digital component is an eligible digital component that (i) has a user group identifier that matches a user group identifier for the user, e.g., a user group identifier for a user group that includes the user as a member and (ii) has a pacing selector parameter *pacing_selector* that has a specified value, e.g., a value of one. As described above, each selection value and corresponding digital component included in a campaign can be linked to a user group identifier - universal campaign identifier pair {*ug_id*, *universal_campaign_id*} for the campaign. In other examples, the user group membership condition can be replaced with another condition, e.g., a k-anonymity condition, muted condition, etc.

For user group membership eligibility, a digital component of a row in the second stage LUT is a candidate for selection if its user group identifier *ug_id* that is part of the second stage lookup key and/or the metadata associated with the digital component for the row matches one of the user group identifiers of the user and the pacing selector parameter *pacing_selector* has a specified value, e.g., a value of one. Conceptually, to determine whether a digital component is a candidate based on user group membership of the user using a two table cuckoo filter to represent a user's group membership, a computing system can determine whether the user group identifier *ug_id* of the second stage lookup key matches one of the two tags in one of the two cuckoo filter locations.

The computing systems $MPC_1$ and $MPC_2$ can identify the candidate digital components using secure MPC techniques using secret shares such that neither computing system $MPC_1$ nor $MPC_2$ knows which digital components are candidates or the user groups that include the user as a member. To do this, computing system $MPC_1$ calculates a first secret share of a user group-based candidate parameter *is_dc_a_ug_candidate* for each eligible digital component. Similarly, computing system $MPC_2$ calculates a second secret share of the user group-based candidate parameter *is_dc_a_ug_candidate* for each eligible digital component. The candidate parameter *is_dc_a_ug_candidate* can be a boolean value (e.g., zero or one) that indicates whether the digital component is eligible to be a candidate based on the user group for the digital component matching a user group identifier for a user group that includes the user as a member.

The first secret share of the user group-based candidate parameter *is_dc_a_ug_candidate* for a digital component and its selection value can be represented as [*is_dc_a_ug_candidate$_{sv, 1}$*] and the second secret share of the user group-based candidate parameter *is_dc_a_candidate* for the selection value can be represented as [*is_dc_a_candidate$_{sv, 2}$*]. The subscript "sv" indicates that the secret shares correspond to a given selection value, which corresponds to a given digital component. The first secret share of the user group-based candidate parameter for a digital component linked to a user group identifier *ug_id* is a secret share of a boolean *ug_id* == [$m_{F_1(ug\_id,1)}$], which is equivalent to *ug_id* == [$g_{ug\_id,1}(F_1(ug\_id))$]. The second secret share of the user group-based candidate parameter for a user group identifier *ug_id* is a secret share of a boolean *ug_id* == [$m_{F_1(ug\_id,2)}$], which is equivalent to *ug_id* == [$g_{ug\text{-}id,1}(F_1(ug\_id))$]. The symbol "==" represents an equality test between a secret message represented as secret share and either a cleartext value, or another secret message represented as secret share, which is true (or 1) if the two values are equal or false (or 0) if the values are not equal.

The computing systems $MPC_1$ and $MPC_2$ can compute the secret shares [*is_dc_a_ug_candidate$_{sv, 1}$*] and [*is_dc_a_ug_candidate$_{sv, 2}$*] for the hash function $F_1$ using secure MPC techniques with one or more roundtrips between the computing systems $MPC_1$ and $MPC_2$ to evaluate the equality expressions of *ug_id* == [$g_{ug\_id,1}(F_1(ug\_id))$] and *ug_id* == [$g_{ug\_id,1}(F_1(ug\_id))$]. That is, the computing systems $MPC_1$ and $MPC_2$ can determine the secret shares [*is_dc_a_ug_candidate$_{sv, 1}$*] and [*is_dc_a_candidate$_{sv, 2}$*] for each user group corresponding to a stored selection value for a digital component based on the distributed point functions $g_{ug\_id, 1}$ and $g_{ug\_id, 2}$ for each user group identifier received from the client device 110 as part of the digital component request.

The computing systems $MPC_1$ and $MPC_2$ can use secret sharing techniques or secret sharing libraries that support the operations shown in Table 3 below. One example secret sharing technique that supports these operations is Security through Private Information Aggregation (SEPIA).

Table 3

| Syntax of Operation | Output | Remark |
|---|---|---|
| [*a*] + [b} | [*a* + *b*] | Add two shares for two secrets, respectively. |
| Reconstruct([$a_1$], [$a_2$]) | *a* | Reconstruct a secret a from its shares $a_1$ and $a_2$. The result is *a* in plaintext. |
| $c \times$ [*a*] | [$c \times a$] | Multiply a share with a known constant in plaintext. |
| [*a*] $\times$ [*b*] | [$a \times b$] | Multiply two shares of two secrets, respectively. |
| [*a*] == *b* | [1] if *a* == *b*, [0] otherwise | Test the equality between a secret *a* represented as a secret share and a constant plaintext value *b*. This can require multiple roundtrips between MPC servers. |

The computing systems $MPC_1$ and $MPC_2$ can also calculate, for each eligible digital component, secret shares of an overall candidate parameter *is_dc_overall_candidate$_{sv}$* based on the secret shares of the user group-based candidate parameter *is_dc_a_ug_candidate$_{sv}$* and secret shares of the pacing selector parameter *pacing_selector$_{sv}$* for the campaign that includes the digital component. The overall candidate parameter *is_dc_overall_candidate$_{sv}$* for a digital component defines whether the digital components and its selection value are ultimately eligible for selection based on the user group identifier for the digital component and its corresponding user group matching a user group of the user to which the selected digital component will be provided and based on the pacing parameter *pacing_selector$_{sv}$* for the campaign that includes the digital component.

Conceptually, the overall candidate parameter *is_de_overall_candidate$_{sv}$* for a selection value can be calculated using relationship 5 below.

$$is\_dc\_overall\_candidate_{sv} = is\_dc\_a\_ug\_candidate_{sv} \times pacing\_selector_{sv} \qquad (5)$$

In secret shares, the computing systems $MPC_1$ and $MPC_2$ can use round trip remote procedure calls (RPCs) to calculate the secret shares [*is_dc_overall_candidate$_{sv,1}$*] and [*is_dc_overall_candidate$_{sv,2}$*] of the overall candidate parameter *is_dc_overall_candidate$_{sv}$*]. The first secret share [*is_dc_overall_candidate$_{sv,1}$*], which can be held by computing system $MPC_1$ at the end of the calculation, can be calculated using relationship 6 below. Similarly, the second secret share [*is_dc_overall_candidate$_{sv,2}$*], which can be held by computing system $MPC_1$ at the end of the calculation, can be calculated using relationship 7 below. These two relationships can be calculated as part of the same MPC process using the RPCs by taking the four values on the right hand-side of the relationships and generating the two secret shares [is_dc_overall_candidatesv,1] and [is_dc_overall_candidatesv,2].

$$[is\_dc\_overall\_candidate_{sv,1}] = [is\_dc\_a\_ug\_candidate_{sv,1}] \times [pacing\_selector_{sv,1}] \quad (6)$$

$$[is\_dc\_overall\_candidate_{sv,2}] = [is\_dc\_a\_ug\_candidate_{sv,2}] \times [pacing\_selector_{sv,2}] \quad (7)$$

These calculations can convert boolean values true and false into values zero and one, respectively. The calculations also convert the boolean AND operation into a multiplication operation, as secret sharing techniques can support integer operations, but may not support boolean operations.

The computing system $MPC_1$ determines an order of the selection values for the digital components (308). Similarly, the computing system $MPC_2$ determines an order of the selection values for the digital components (310). These two orders should be exactly the same because the input to the ordering process is the same on the two computing systems $MPC_1$ and $MPC_2$. Each computing system $MPC_1$ and $MPC_2$ can determine an order of the selection values in its second stage LUT. This order can include all of the selection values in the second stage LUT, including the candidate selection values and the selection values that are not candidates. The order can be from the highest selection value to the lowest selection value. In some implementations, the selection values used for the order can be the value that would be provided to the publisher of the resource with which a selected digital component would be displayed, e.g., after any sharing with a DSP 150 and/or SSP 170. As the selection values are in cleartext, the computing systems $MPC_1$ and $MPC_2$ do not have to perform any roundtrip computations to order the selection values. Instead, each computing system $MPC_1$ and $MPC_2$ can order the selection values of its second stage LUT independently. If the selection values were stored as secret shares at each computing system $MPC_1$ and $MPC_2$, with each computing system $MPC_1$ and $MPC_2$ having a respective secret share of each selection value, the computing systems $MPC_1$ and $MPC_2$ can perform a secure MPC process using roundtrip computations to order the selection values. If there is a tie between two or more selection values, the computing systems $MPC_1$ and $MPC_2$ can break the tie deterministically using other metadata for the digital components corresponding to these selection values.

The computing systems $MPC_1$ and $MPC_2$ determine secret shares of an accumulated value for each candidate digital component (312). Conceptually, the accumulated value for a given digital component represents a total number of eligible candidate digital components from the top of the order to the selection value for the given digital component, including the selection value for the given digital component if the given digital component is a candidate. This concept is shown in Table 4 below.

Table 4

| Ordered Selection Values | *is_dc_overall_candidate* | Accumulated Value (*acc*) | Is Accumulated Value Equal to 1? |
|---|---|---|---|
| Highest | 0 | 0 | 0 |
| 2nd Highest | 1 | 1 | 1 |
| 3rd Highest | 0 | 1 | 1 |
| 4th Highest | 1 | 2 | 0 |
| ... | ... | ... | ... |

In some implementations, the accumulated value for a given digital component represents a total number of candidate digital components from the top of the order to the given digital component, excluding the given digital component. In this example, the fourth column would represent whether the accumulated value is equal to zero rather than one. In either case, the accumulated value for each digital component indicates a position of the digital component in a ranked order of the candidate digital components that are candidates for selection based on the digital component being associated with a user group identifier that matches a user group identifier of the user.

Conceptually, in this Table 4, the accumulated value (*acc*) is incremented for each digital component that has an overall candidate parameter *is_dc_overall_candidate* equal to one as it progresses from the top of the order to the bottom of the order. As described below, the calculation of the accumulated values *acc* is performed in secret shares. For example, the accumulated value *acc* for the digital component having the highest selection value is zero as the overall candidate parameter *is_dc_overall_candidate* for the highest selection value is equal to zero. The accumulated value *acc* for the second digital component is one as the overall candidate parameter *is_dc_overall_candidate* for the second digital component is equal to one and none of the selection values above the second highest selection value has an overall candidate parameter *is_dc_overall_candidate* equal to one. Moving down the order, the overall candidate parameter *is_dc_overall_candidate* for the third highest selection value is zero, so the accumulated value *acc* for the third digital component is not incremented from the accumulated value *acc* for the second digital component. As the overall candidate parameter *is_de_overall_candidate* for the fourth highest selection value is one, the accumulated value *acc* for the fourth digital component is incremented by one from the accumulated value *acc* for the third highest selection value. Thus, the accumulated value *acc* for the fourth digital component is equal to two as there are two digital components that have an overall candidate parameter *is_dc_overall_candidate* from the highest selection value to the fourth highest selection value, inclusive.

Using this table, the computing systems $MPC_1$ and $MPC_2$ would select, for distribution to the client device 110, the digital component corresponding to the selection value for which the overall candidate parameter *is_dc_overall_candidate* has a value of one and the accumulated value *acc* has a value of one, as indicated in the fourth column of Table 4. This represents the digital component corresponding to the highest ordered selection value for which the overall candidate parameter *is_dc_overall_candidate* has a value of one. As the overall candidate parameter *is_dc_overall_candidate* is in secret shares for the computing systems $MPC_1$ and $MPC_2$ to maintain user privacy and ensure that user data is not leaked, the computing systems $MPC_1$ and $MPC_2$ determine secret shares of the accumulated value *acc* for each digital component and use roundtrip computations to determine which digital component has an accumulated value *acc* that is equal to one and an overall candidate parameter *is_de_overall_candidate* that is equal to one.

The computing systems $MPC_1$ and $MPC_2$ can determine their secret shares of the accumulated value *acc* for each digital component independently without any roundtrip computations in some implementations depending on the secret share algorithm. For example, computing system $MPC_1$ can determine, for each digital component, a first share $[acc_{ug\_id,\ 1}]$ of the accumulated value *acc* by traversing all of the selection values in order from highest to lowest and summing the overall candidate parameters *is_dc_overall_candidate* for the selection values along the way, as described above with reference to Table 4. Similarly, computing system $MPC_2$ can determine, for each digital component, a second share $[acc_{ug\_id,\ 2}]$ of the accumulated value *acc* by traversing all of the selection values in order from highest to lowest and summing the overall candidate parameters *is_dc_overall_candidate* for the selection values along the way.

The computing systems $MPC_1$ and $MPC_2$ determine, for each digital component, secret shares of a result that indicates whether the accumulated value has a specified value (314). The specified value can be a value of one, as shown in columns 3 and 4 of Table 4. As described above, the digital component for which the accumulated value is one and the overall candidate parameter *is_dc_overall_candidate* is one is the highest selection value among the selection values for the candidate digital components.

The computing systems $MPC_1$ and $MPC_2$ can engage in multiple rounds of computations, e.g., multiple RPCs, as part of a secure MPC process to calculate the equality operation $aee_{sv} == 1$ in terms of secret shares for each digital component. At the end of this process, computing system $MPC_1$ has, for each digital component, one secret share of the result $acc_{sv} == 1$, and computing system $MPC_2$ has, for each digital component, the other secret share of the result $acc_{sv} == 1$.

The computing systems $MPC_1$ and $MPC_2$ determine secret shares of a winner parameter *is_dc_the_winner*$_{sv}$ for each digital component (316). The computing systems $MPC_1$ and $MPC_2$ can determine the winner parameters *is_dc_the_winner*$_{sv}$ based on, for each digital component, the secret shares of the accumulated value $acc_{sv} == 1$ and the secret shares of the overall candidate parameter *is_dc_overall_candidate*$_{sv}$ for each digital component. The winner parameter *is_dc_the_winner*$_{sv}$ for each digital component can be a boolean value that indicates whether the digital component is the winner of the selection process, e.g., whether the digital component is selected for distribution to the client device 110 in response to the digital component request.

In some implementations, computing system $MPC_1$ and $MPC_2$ can carry out secret share multiplication protocol to calculate, for each selection value, the winner parameter *is_dc_the_winner*$_{sv} == (is\_dc\_a\_candidate_{sv} \times (acc_{sv} == 1))$ in terms of secret shares. This requires one RPC between the computing systems $MPC_1$ and $MPC_2$ to multiple two secret shares. At the end of this MPC process, computing system $MPC_1$ has one secret share of the result *is_dc_the_winner*$_{sv}$ represented as $[is\_dc\_the\_winner_{sv,\ 1}] = [is\_dc\_overall\_candidate_{sv,\ 1}] \times ([acc_{sv,\ 1}] == 1)$. Similarly, computing system $MPC_2$ has the other secret share of the result *is_dc_the_winner*$_{sv}$ represented as $[is\_dc\_the\_winner_{sv,\ 2}] = [is\_dc\_overall\_candidate_{sv,\ 2}] \times ([acc_{sv,\ 2}] == 1)$. Note that for all digital components, at most one digital component has a winner parameter *is_dc_the_winner*$_{sv}$ that is equal to one, which is the digital component that is selected for distribution to the client device 110. All others would equal zero.

The computing system $MPC_1$ generates a selection process identifier $SPID_1$ (318). The selection process identifier $SPID_1$ uniquely identifies the current selection process for selecting a digital component in response to the received digital component request. The selection process identifier $SPID_1$ can be a nonce.

The computing system $MPC_2$ generates a selection process identifier $SPID_2$ (320). The selection process identifier $SPID_2$ uniquely identifies the current selection process for selecting a digital component in response to the received digital component request. The selection process identifier $SPID_2$ can be a nonce.

The computing system $MPC_1$ stores the first secret shares of the winning parameters keyed by the selection process identifier $SPID_1$ (322). For example, the computing system $MPC_1$ can store the first secret shares of the winning parameters in a table or other data structure with key or other reference to the selection process identifier $SPID_1$. The computing system $MPC_1$ can also store, for each first secret share of a winning parameter a reference to the digital component and corresponding selection value to which the first secret share of the winning parameter corresponds.

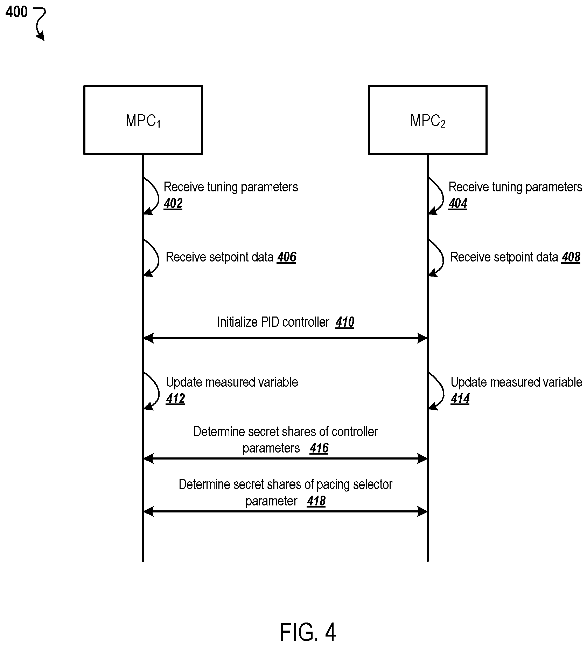

The computing system $MPC_2$ stores the second secret shares of the winning parameters keyed by the selection process identifier $SPID_2$ (324). For example, the computing system $MPC_2$ can store the second secret shares of the winning parameters in a table or other data structure with key or other reference to the selection process identifier $SPID_2$. The computing system $MPC_2$ can also store, for each second secret share of a winning parameter a reference to the digital component and corresponding selection value to which the second secret share of the winning parameter corresponds. The computing systems $MPC_1$ and $MPC_2$ can use the selection process identifiers $SPID_1$ and $SPID_2$ and the secret shares of the winning parameters and to update the measured process variables, as described in more detail with reference to FIG. 4.

In some implementations, computing systems $MPC_1$ and $MPC_2$ encrypt the secret shares of the winning parameters with secret keys confidential to $MPC_1$ and $MPC_2$, respectively. Computing systems $MPC_1$ and $MPC_2$ can then store the encryption result in the response back to the application 112. The application 112 sends the encryption result back to the MPC cluster 130 in an impression notification. Such alternative implementations should ensure that the encrypted secret shares of the winning parameters are small enough to avoid wasting a lot of bandwidth.

The computing systems $MPC_1$ and $MPC_2$ calculate a selection result (326). The computing systems $MPC_1$ and $MPC_2$ can calculate the selection result based on the winner parameters for the selection values and the digital component information element *de_information_element* for the selection values or the selection values themselves. As described above, the digital component information element *dc_information_element* for a digital component can include the selection value for the digital component and other data for the digital component.

Conceptually, the computing systems $MPC_1$ and $MPC_2$ can calculate the selection result $result_{F1}$ using relationship 8 below.

$$result_{F_1} = \sum_{sv} is\_dc\_the\_winner_{sv} \times dc\_information\_element_{sv} \qquad (8)$$

That is, the computing systems $MPC_1$ and $MPC_2$ can determine, across all of the digital component, the sum of the products of the winner parameter *is_dc_the_winner$_{sv}$* and the digital component information element *de_information_element$_{sv}$*. In this example, the selection result $result_{F1}$ will either have a value zero if there are no cached selection values for digital components that have a user group identifier that matches a user group identifier of the user or will have a value equal to the digital component information element *de_information_element* of the selected digital component that has a *is_dc_the_winner$_{sv}$* that is equal to one. In another example, the digital component information element *de_information_element* can be replaced in relationship 8 with the selection values for the digital components. In this example, the selection result $result_{F1}$ will either have a value zero if there are no cached selection values for digital components that have a user group identifier that matches a user group identifier of the user or will have a value equal to the selection value of the selected digital component that has a *is_dc_the_winner$_{sv}$* that is equal to one.

To perform the calculation in secret shares, computing system $MPC_1$ takes all of the cached selection values and multiplies the digital component information element *de_information_element$_{sv}$* for the selection value, which can be in cleartext, by the first secret share of the winner parameter [*is_dc_the_winner$_{sv,1}$*]. The computing system $MPC_1$ can then determine the sum of these products and return the sum to the client device 110 that submitted the digital component request. That is, computing system $MPC_1$ can determine, as a first share of the result [$result_{F_{1,1}}$], the sum using relationship 9 below.

$$[result_{F_{1,1}}] = \sum_{sv}([is\_dc\_the\_winner_{sv,1}] \times dc\_information\_element_{sv}) \qquad (9)$$

The computing system $MPC_2$ can perform a similar calculation to determine the second share of the result [$result_{F_{1,2}}$] using relationship 10 below.

$$[result_{F_{1,2}}] = \sum_{sv}([is\_dc\_the\_winner_{sv,2}] \times dc\_information\_element_{sv}) \qquad (10)$$

The computing system $MPC_1$ sends the first share of the selection result [$result_{F_{1,1}}$] and the selection process identifier $SPID_1$ to the client device 110 (328). Similarly, the computing system $MPC_2$ sends the second share of the selection result [result$_{F_{1,2}}$] and the selection process identifier *SPID$_2$* to the client device 110 (330). The application 112 can then reconstruct the selection result *result$_{F_1}$* in cleartext using the two secret shares [*result$_{F_{1,1}}$*] and [*result$_{F_{1,2}}$*], e.g., by determining a sum of the secret shares if additive secret share algorithms are adopted. If the selection result *result$_{F_1}$* has a value of zero, then the MPC cluster 130 did not identify a digital component for a user group that includes the user as a member. Otherwise, the selection result *result$_{F_1}$* has a value equal to a digital component information element *de_information_element,* the application 112 can parse the digital component information element *dc_information_element* to obtain the selection value and the metadata for the digital component. The application 112 can then either display the digital component or perform a selection process using the digital component and other digital components received from an SSP 170, as described above.

In a two-table cuckoo filter implementation, the application 112 can receive two selection results, one for each hash function $F_1$ and $F_2$. In this example, the application 112 can select a digital component from a set of digital components that includes both of these digital components and any digital components received from the SSP 170.

In some implementations, the application 112 can perform a final verification that the user group for the digital component(s) selected by the MPC cluster 130 matches a user group that includes the user as a member. For example, the digital component information element *dc_information_element* for each digital component can include the user group identifier(s) for the digital component. The application 112 can compare the user group identifier(s) of the digital component information element *dc_information_element* to the user group list for the user. If there is no match, the application 112 can exclude the digital component from the selection process. If there is a match, the application 112 can include the digital component in the selection process.

As described above, receiving two selection results from the MPC cluster 130 can facilitate selection value scrapping. To reduce this risk, the MPC cluster 130 can perform a process to return only one selection result.

In a one-table cuckoo filter implementation, each user group identifier *ug_id* can show up in two places whose indices are $F_1(ug\_id)$ and $F_2(ug\_id)$. Let *M* represent the one-table cuckoo filter and $M_i$ represent the value of the i-th element in the table. The candidate parameter *is_de_a_ug_candidate$_{sv}$* for a digital component with the user group identifier *ug_id* is true if either $M_{F_1(ug\_id)} == ug\_id$ or $M_{F_2(ug\_id)} == ug\_id.$ This MPC cluster 130 can calculate candidate parameter *is_dc_a_candidate$_{sv}$* for the digital component using either relationship 11 or 12 below.

$$is\_dc\_a\_candidate_{sv} = (M_{F_1(ug\_id)} == ug\_id) + (M_{F_2(ug\_id)} == ug\_id) \tag{11}$$

$$is\_dc\_a\_candidate_{sv} = ((M_{F_1(ug\_id)} - ug\_id) \times (M_{F_2(ug\_id)} - ug\_id)) == 0 \tag{12}$$

Relationship 11 can involve two equality tests that can be performed in parallel. Relationship 12 can require one equality test and one multiplication. When performing these operations over secret shares using a secure MPC process, multiplication requires less computation and one round trip but an equality test can require more computation and four roundtrips in a probabilistic solution. Thus, relationship 11 can require one less round trip but more computation than relationship 12.

The computing system MPC$_1$ can calculate, based on relationship 11, a first secret share of the candidate parameter *is_dc_a_candidate$_{sv}$* for the digital component over secret shares using relationship 13 below.

$$[is\_dc\_a\_candidate_{sv,1}] = (ug\_id == [g_{ug\_id,1}(F_1(ug\_id))]) + (ug\_id ==$$
$$[g_{ug\_id,1}(F_2(ug\_id))]) \tag{13}$$

Similarly, computing system MPC$_2$ can calculate, based on relationship 12, a second secret share of the candidate parameter *is_dc_a_candidate$_{sv}$* for the digital component over secret shares using relationship 14 below.

$$[is\_dc\_a\_candidate_{sv,2}] = (ug\_id == [g_{ug\_id,2}(F_1(ug\_id))]) + (ug\_id ==$$
$$[g_{ug\_id,2}(F_2(ug\_id))]) \tag{14}$$

Alternatively, the computing system MPC$_1$ can calculate, based on relationship 12, the first secret share of the candidate parameter *is_dc_a_candidate$_{sv}$* for the digital component over secret shares using relationship 15 below.

$$[is\_dc\_a\_candidate_{sv,1}] = (ug\_id - [g_{ug\_id,1}(F_1(ug\_id))]) \times (ug\_id -$$
$$[g_{ug\_id,1}(F_2(ug\_id))]) == 0 \tag{15}$$

The computing system $MPC_2$ can calculate, based on relationship 13, the second secret share of the candidate parameter *is_dc_a_candidate$_{sv}$* for the digital component over secret shares using relationship 16 below.

$$[is\_dc\_a\_candidate_{sv,2}] = (ug\_id - [g_{ug\_id,2}(F_1(ug\_id))]) \times (ug\_id -$$

$$[g_{ug\_id,2}(F_2(ug\_id))]) == 0 \qquad (16)$$

The MPC cluster 130 can then use a similar process as the process 300 of FIG. 3 to calculate secret shares of the selection result *result.* In particular, the computing systems $MPC_1$ and $MPC_2$ can calculate, for each digital component, the secret shares $[acc_{sv,\ 1}]$ and $[acc_{sv,\ 2}]$ of the accumulated value *acc*, respectively, based on the order of the digital components and the candidate parameters for the digital components.

The computing systems $MPC_1$ and $MPC_2$ can calculate, for each digital component, the secret shares $[is\_dc\_the\_winner_{sv,\ 1}]$ and $[is\_dc\_the\_winner_{sv,2}]$ of the winner parameter *is_dc_the_winner*, respectively, based on the overall candidate parameter for the digital component and whether the accumulated value for the digital component equals one (or zero, depending on the implementation).

The computing systems $MPC_1$ and $MPC_2$ can calculate secret shares $[result_1]$ and $[result_2]$ of the selection result *result*, using relationships 17 and 18 below.

$$[result_1] = \sum_{sv}([is\_dc\_the\_winner_{sv,1}] \times dc\_information\_element_{sv}) \qquad (17)$$

$$[result_2] = \sum_{sv}([is\_dc\_the\_winner_{sv,2}] \times dc\_information\_element_{sv}) \qquad (18)$$

The computing system $MPC_1$ can return the first share of the selection result $[result_1]$ to the application 112 and computing system $MPC_2$ can return the second share of the selection result $[result_2]$ to the application 112. The application 112 can then reconstruct the selection result *result* using the two secret shares, as described above.

The above description relates to multiplication between secret shares of secret integers whose value is either 0 or 1 to computer logical AND. The above description also relates to 1 minus a secret share of a secret integer whose value is either 0 or 1 to computer logical NOT. In some implementations, alternative solutions can be adopted to evaluate logical expressions with secret shares. For example, to compute the logical AND of additive several secret shares of secret integers whose value are either 0 or 1, the MPC server can compare the sum of those additive secret shares to the number of secret shares. For yet another example, to compute an arbitrary logical expression with secret shares as input, the MPC server can adopt the truth table approach, i.e., computing system $MPC_1$ can build a truth table that contains one row for each possible combination of input secret shares held by $MPC_2$. The computing system $MPC_1$ randomly chooses a secret share for the result, denoted as $[result_1]$. For each row, computing system $MPC_1$ can combine its input secret shares and the speculative input secret shares held by $MPC_2$ to reconstruct the input to the logical expression in cleartext, then evaluate the result of the logical expression. For each row, computing system $MPC_1$ splits the result to two secret shares, one of which is [result$_1$], the other is [result$_2$]. The computing system $MPC_1$ then writes $[result_2]$ to the row in the truth table. After computing system $MPC_1$ completes the construction of the truth table, computing system $MPC_2$ can initiate an Oblivious Transfer extension (OTe) to fetch the row in the truth table corresponding to the input secret shares held by $MPC_2$. The fetch result is [result$_2$]. At the end of the above process, computing systems $MPC_1$ and $MPC_2$ hold [result$_1$] and [result$_2$] respectively, which are the secret shares of the logical expression result. The computing system $MPC_1$ has no knowledge of the value of [result$_2$], and computing system $MPC_2$ has no knowledge of the value of [result$_1$]. In some implementations, computing systems $MPC_1$ and $MPC_2$ can evaluate the logical expression to determine *is_dc_a_candidate$_{sv,1}$* and *is_dc_a_candidate$_{sv,2}$* by constructing a garbled circuit.

FIG. 4 is a swim lane diagram that illustrates an example process 400 for using a feedback controller to determine secret shares of a pacing selector parameter. Operations of the process 400 can be implemented, for example, by the computing systems $MPC_1$ and $MPC_2$ of the MPC cluster 130. Operations of the process 400 can also be implemented as instructions stored on one or more computer readable media which may be non-transitory, and execution of the instructions by one or more data processing apparatus can cause the one or more data processing apparatus to perform the operations of the process 400. In this example, the feedback controller is a PID controller.

In general, a PID controller is a feedback controller that uses an error value, which is a difference between a target setpoint and a measured variable, to determine an output that drives the measured variable towards the setpoint. In the context of pacing the distribution of digital components to client devices, the setpoint for a campaign can be an impression rate, an interaction rate, a conversion rate, and/or a resource depletion rate (e.g., a budget spend rate). Similarly, the measured variable can be an impression rate, an interaction rate, a conversion rate, and/or a resource depletion rate over a given time period for the campaign. The given time period can be from a start time at which the campaign started until a current time.

A PID controller uses tuning parameters to determine how to adjust the output based on the measured process variable over time. These tuning parameters include proportional, integral, and derivative terms, denoted by P, I, and D, respectively. The proportional parameter, the integral parameter, and the derivative parameter can be displayed as $K_p$, $K_i$, and $K_d$, respectively.

A PID controller can be implemented using a repetitive loop in which the following parameters are calculated for each change in time dt:

$$error = setpoint - measured\ variable \tag{19}$$

$$integral = integral + error \times dt \tag{20}$$

$$derivative = \frac{(error - previous\ error)}{dt} \tag{21}$$

$$output = (K_p \times error) + (K_i \times integral) + (K_d \times derivative) \tag{22}$$

$$previous\ error = error \tag{23}$$

To protect user privacy and prevent access to user group membership information, the MPC cluster 130 can implement a PID controller for each campaign using a secure MPC process and secret sharing.

The computing system $MPC_1$ receives tuning parameters for a PID controller for controlling the pacing of digital components of a campaign (402). Similarly, the computing system $MPC_2$ receives tuning parameters for the PID controller (404). The owner of the campaign, e.g., a DSP for digital component provider, can provide the tuning parameters $K_p$, $K_i$, and $K_d$ to the computing systems $MPC_1$ and $MPC_2$. In another example, the MPC cluster 130 can use default tuning parameters, e.g., if custom tuning parameters are not provided. If the tuning parameters are sensitive such that they should not be revealed to the computing systems $MPC_1$ and $MPC_2$ or the entities that maintain the computing systems $MPC_1$ and $MPC_2$, the owner can send respective secret shares of each tuning parameter to each computing system $MPC_1$ and $MPC_2$.

The computing system $MPC_1$ receives setpoint data for the campaign (406). Similarly, the computing system $MPC_2$ receives setpoint data for the campaign (408). The setpoint data can include a setpoint parameter *setpoint*, which can be an impression rate, e.g., $SP_{impression} = r_{impression}(t)$, an interaction rate, e.g., $SP_{interaction} = r_{interaction}(t)$, or resource depletion rate, e.g., $SP_{resource} = r_{resource}(t)$, and a unit of time, e.g., $N$ seconds. For example, an impression rate setpoint can be 10 (or another number) impressions of digital components of the campaign per day (or other time period). As described above, each campaign can have a universal campaign identifier *campaign_uuid*.

In some implementations, the setpoint data can include, for the campaign, a total amount of digital component distribution resources, a target number of impressions of digital components for the campaign, and/or a target number of user interactions with the digital components for the campaign. The setpoint data can also include a specified timeframe for the campaign. In this example, the MPC cluster 130 can determine the setpoint rates (e.g., impression rate).

In some implementations, to prevent malicious parties from disrupting the campaign, the owner of the campaign can digitally sign the setpoint data, and/or tuning parameters $K_p$, $K_i$, and $K_d$. In this example, the computing systems $MPC_1$ and $MPC_2$ can verify the digital signatures before using the setpoint data and/or the tuning parameters for the PID controller.

For brevity, the remainder of the process 400 is described in terms of an impression rate setpoint and measured variable. Thus, the setpoint parameter *setpoint* can be $SP_{resource} = r_{resource}(t)$. A similar process can be used for interaction rates and resource depletion rates by substituting the setpoint and measured variable.

The computing systems $MPC_1$ and $MPC_2$ initialize the PID controller for the campaign (410). To initialize the PID controller, computing system $MPC_1$ can initialize a first secret share of a previous error parameter [$previous\_error_{campaign,\ impression,\ 1}$] for the campaign to zero [$0_1$]. The computing system $MPC_1$ can also initialize a first secret share of an integral parameter [$integral_{campaing,impression,\ 1}$] for the campaign to zero [$0_1$].

Similarly, computing system $MPC_2$ can initialize a first secret share of a previous error parameter [$previous\_error_{campaign,\ impression,\ 2}$] for the campaign to zero [$0_2$]. The computing system $MPC_2$ can also initialize a first secret share of an integral parameter [$integral_{campaign,\ impression,\ 2}$] for the campaign to zero [$0_2$].

The computing system $MPC_1$ updates the measured process variable (412). Similarly, computing system $MPC_2$

updates the measured process variable (414). As the process for updating the process variable can differ for different process variables, the update process is provided for impression rate, interaction rate, and resource depletion rate. The process variable of impressions, user interactions, and resource depletion can be denoted as $pv_{universal\_campaign\_id,\ impression}$, $pv_{universal\_campaign\_id,\ interaction}$, and $pv_{universal\_ampaign\_id,\ resource}$, respectively.

As described above with reference to FIG. 2, the client devices 110 can provide, to the MPC cluster 130 notifications after digital components have been displayed at the client devices 110. For a digital component, computing system $MPC_1$ can receive a notification that includes a first secret share [$clicked_1$] of a clicked parameter that indicates whether a user interacted with the digital component and the selection process identifier $SPID_1$ for the selection process used to select the digital component that was received from computing system $MPC_1$. Similarly, computing system $MPC_2$ can receive a notification that includes a second secret share [$clicked_2$] of a clicked parameter that indicates whether a user interacted with the digital component and the selection process identifier $SPID_2$ for the selection process used to select the digital component that was received from computing system $MPC_2$. The computing systems $MPC_1$ and $MPC_2$ can update process variables for a campaign each time a notification is received.

The computing systems $MPC_1$ and $MPC_2$ can use their respective selection process identifiers to obtain the stored secret shares of the winning parameters for a given selection process. If the process identifier of a notification does not match the process identifier for any secret shares of winning parameters, the notification can be considered fraudulent.

If the process variable is resource depletion rate, computing system $MPC_1$ can increment its first secret share of the resource depletion process variable [$pv_{campaing\_uuid,\ resource,\ 1}$] for each campaign by $\Sigma_{sv}$[$is\_dc\_the\_winner_{sv,1}$] $\times$ [$pre\_shared\_sv\_amounts_{sv,1}$], where the digital component corresponding to the selection value $sv$ is associated with the universal campaign identifier $universal\_campaign\_identifier$. In this relationship, the parameter [$pre\_shared\_sv\_amount_{sv,1}$] is a first secret share of the selection value before any sharing between the publisher, SSP, and DSP, e.g., it is the amount that the digital component provider will provide for this display of a digital component. Splitting this selection value into secret shares protects the digital component providers' and DSPs' business confidential information.

Similarly, computing system $MPC_2$ can increment its second secret share of the resource depletion process variable [$pvuniversal\_{campaign\_id,\ resource,\ 2}$] for each campaign by $\Sigma_{sv}$[$is\_dc\_the\_winner_{sv,2}$] $\times$ [$pre\_shared\_sv\_amount_{sv,2}$], where the digital component corresponding to the selection value sv is associated with the universal campaign identifier $universal\_campaign\_id$. In this relationship, the parameter [$pre\_shared\_sv\_amount_{sv,2}$] is a second secret share of the selection value before any sharing between the publisher, SSP, and DSP, e.g., it is the amount that the digital component provider will provide for this display of a digital component.

Using this process, the computing systems $MPC_1$ and $MPC_2$ increment the amount of resources spent for the campaign of the winning digital component by the amount that the digital component provider will provide for display of its digital components. As the winner parameter for the non-winning selection values would be zero, the amount of resources spent for those campaigns would not be incremented.

If the process variable is an impression rate, computing system $MPC_1$ can update its first secret share of the impression rate process variable [$pv_{universal\_campaign\_id,\ impression,\ 1}$] for each campaign by $\Sigma_{sv}$[$is\_dc\_the\_winner_{sv,1}$], where the digital component corresponding to the selection value sv is associated with the universal campaign identifier $universal\_campaign\_id$. In this way, computing system $MPC_1$ increments the number of impressions for the campaign of the winning selection value by one.

Similarly, computing system $MPC_2$ can update its first secret share of the impression rate process variable [$pv_{universal\_campaign\_id,\ impression,\ 2}$] for each campaign by $\Sigma_{sv}$[$is\_dc\_the\_winner_{sv,2}$], where the digital component corresponding to the selection value sv is associated with the universal campaign identifier $universal\_campaign\_id$. In this way, computing system $MPC_2$ increments the number of impressions for the campaign of the winning selection value by one.

If the process variable is an interaction rate, computing system $MPC_1$ can update its first secret share of the interaction rate process variable [$pv_{universal\_campaign\_uuid,\ interaction,\ 1}$] for each campaign by $\Sigma_{sv}$[$is\_dc\_the\_winner_{sv,1}$] $\times$ [$clicked_1$], where the digital component corresponding to the selection value sv is associated with the universal campaign identifier $universal\_campaign\_id$. In this way, computing system $MPC_1$ increments the number of interactions for the campaign of the winning selection value by one if the clicked parameter indicates that the digital component received a user interaction.

Similarly, computing system $MPC_2$ can update its second secret share of the interaction rate process variable [$pv_{universal\_campaign\_id,\ interaction,\ 2}$] for each campaign by $\Sigma_{sv}$[$is\_dc\_the\_winner_{sv,2}$] $\times$ [$clicked_2$], where the digital component corresponding to the selection value sv is associated with the universal campaign identifier $universal\_campaign\_id$. In this way, computing system $MPC_1$ increments the number of interactions for the campaign of the winning selection value by one if the clicked parameter indicates that the digital component received a user interaction.

Each of the updates to the process variables requires multiplication between secret shares. The multiplication can be performed by the computing systems $MPC_1$ and $MPC_2$ using a secure MPC process with one RPC between the two computing systems $MPC_1$ and $MPC_2$.

The computer systems $MPC_1$ and $MPC_2$ determine secret shares of controller parameters for the campaign (416). The computer systems $MPC_1$ and $MPC_2$ can use a secure MPC process to determine the controller parameters.

The controller parameters can include an error (*error*), an integral parameter (*integral*), a derivative parameter (*derivative*), a temporary parameter (*tmp*), an output (*output*), and a previous error parameter (*previous_error*). The computing system $MPC_1$ can use the MPC process to calculate first secret shares of these parameters using relationships 24-29 below.

$$[error_1] = setpoint - [pv_{universal\_campaign\_id,impression,1}] \tag{24}$$

$$[integral_{universal\_campaign\_id,impression,1}] = [integral_{universal\_campaign\_id,impression,1}] + [error_1] \,(25) \tag{25}$$

$$[derivative_1] = [error_1] - [previous\_error_{universal\_campaign\_id,1}] \tag{26}$$

$$[tmp_1] = (K_p \times [error_1]) + (K_i \times [integral_{universal\_campaign\_id,impression,1}]) + (K_d \times [derivative_1]) \,(27) \tag{27}$$

$$[output_{universal\_campaign\_id,impression,1}] = [tmp_1] \tag{28}$$

$$[previous\_error_{universal\_campaign\_id,1}] = [error_1] \tag{29}$$

Similarly, the computing systems $MPC_2$ can use the MPC process to calculate first secret shares of these parameters using relationships 30-35 below.

$$[error_2] = setpoint - [pv_{universal\_campaign\_id,impression,2}] \tag{30}$$

$$[integral_{universal\_campaign\_id,impression,2}] = [integral_{universal\_campaign\_id,impression,2}] + [error_2] \,(31) \tag{31}$$

$$[derivative_2] = [error_2] - [previous\_error_{universal\_campaign\_id,2}] \tag{32}$$

$$[tmp_2] = (K_p \times [error_2]) + (K_i \times [integral_{universal\_campaign\_id,impression,2}]) + (K_d \times [derivative_2]) \,(33) \tag{33}$$

$$[output_{universal\_campaign\_id,impression,2}] = [tmp_2] \tag{34}$$

$$[previous\_error_{universal\_campaign\_id,2}] = [error_2] \tag{35}$$

The output parameter represents a probability based on the difference between the setpoint and the measured variable. The probability can be used to determine whether the campaign satisfies a pacing eligibility condition for the campaign. For example, the probability can be, for the next digital component distribution process that digital components of the campaign are otherwise eligible, a probability that the digital component(s) will be included in the selection process. If the pacing eligibility condition is satisfied, the digital component(s) in the campaign also satisfy the pacing eligibility condition and would be eligible for a digital component selection process, e.g., if all other condition(s) for the digital component are satisfied. For example, if the digital component(s) of the campaign are being displayed at a higher rate than the setpoint, the output would have a lower value, representing a lower probability that the digital component(s) will be selected for inclusion in subsequent selection processes even though the digital component(s) may otherwise be eligible. This lower probability drives the measured impression rate lower towards the setpoint.

The computing systems $MPC_1$ and $MPC_2$ can repetitively calculate the controller parameters for the campaigns, e.g., periodically based on a specified time period. In another example, the computing systems $MPC_1$ and $MPC_2$ can update the controller parameters for a campaign each time the measured variable is updated based on a received notification. By updating the controller parameters in a proactive manner rather than in response to digital component requests, the latency in using the controller's output in digital component selections processes can be greatly reduced.

In some cases, the tuning parameters of the controller for a campaign can be sensitive information. In such examples, the owner of the campaign can provide each computing system $MPC_1$ and $MPC_2$ a respective secret share of each tuning parameter. For example, the owner can provide, to computing system $MPC_1$, first secret shares $[K_{p,1}]$, $[K_{i,1}]$, and $[K_{d,1}]$ of the proportional, integral, and derivative parameters, respectively. Similarly, the owner can provide, to computing system $MPC_2$, second secret shares $[K_{p,2}]$, $[K_{i,2}]$, and $[K_{d,2}]$ of the proportional, integral, and derivative parameters, respectively.

The computing systems $MPC_1$ and $MPC_2$ can use relationships 36 and 37 in place of relationships 27 and 33 when calculating the temporary parameters.

$$[tmp_1] = ([K_{p,1}] \times [error_1]) + ([K_{i,1}] \times [integral_{campaign\_uuid,impression,1}]) + ([K_{d,1}] \times [derivative_1]) \ (36) \qquad (36)$$

$$[tmp_2] = ([K_{p,2}] \times [error_2]) + ([K_{i,2}] \times [integral_{campaign\_uuid,impression,2}]) + ([K_{d,2}] \times [derivative_2]) \ (37) \qquad (37)$$

The computing systems $MPC_1$ and $MPC_2$ determine secret shares of the pacing selector parameter for the campaign (418). The computing systems $MPC_1$ and $MPC_2$ can collaboratively generate a uniformly distributed random number $R$ in the range of $[output_{min}, output_{max}]$ in cleartext. For example, the computing systems $MPC_1$ and $MPC_2$ can use a Diffie-Hellman Key Exchange (DHKE) technique to determine the random number.

The computing systems $MPC_1$ and $MPC_2$ can use the secret shares of the output of the PID controller and the secret shares of the random number to calculate the secret shares of the pacing selector parameter using a secure MPC process. Using the random number enables the computing systems $MPC_1$ and $MPC_2$ to set the boolean value of the pacing selector parameter using the probability represented by the output. The computing system $MPC_1$ can calculate a first secret share of the pacing selector parameter $pacing\_selector$ using relationship 38 below.

$$[pacing\_selector_{campaign\_unid,1}] = ([output_{campaign\_uuid,1}] > R) \times ([pv_{campaign\_uuid,resource,1}] < total\_resources_{campaign\_uuid,1}]) \ (38) \qquad (38)$$

Similarly, computing system $MPC_2$ can calculate a first secret share of the pacing selector parameter $pacing\_selector$ using relationship 39 below.

$$[pacing\_selector_{campaign\_uuid,2}] = ([output_{campaign\_uuid,2}] > R) \times ([pv_{campaign\_uuid\_resource,2}] < total\_resources_{campaign\_uuid,2}]) \ (39) \qquad (39)$$

In relationships 38 and 39, the comparison to the total amount of resources for the campaign ensures that the campaign has remaining resources, e.g., budget, for distributing digital components. The secret shares of the pacing selector for a campaign can be used in the process 200 for each digital component in the campaign. For example, the secret shares $[pacing\_selector_{campiang\_uuid,1}]$ and $[pacing\_selector_{campiang\_uuid,2}]$ can be substituted for $[pacing\_selector_{sv,1}]$ and $[pacing\_selector_{sv,2}]$ in relationships 6 and 7 for each digital component in the campaign.

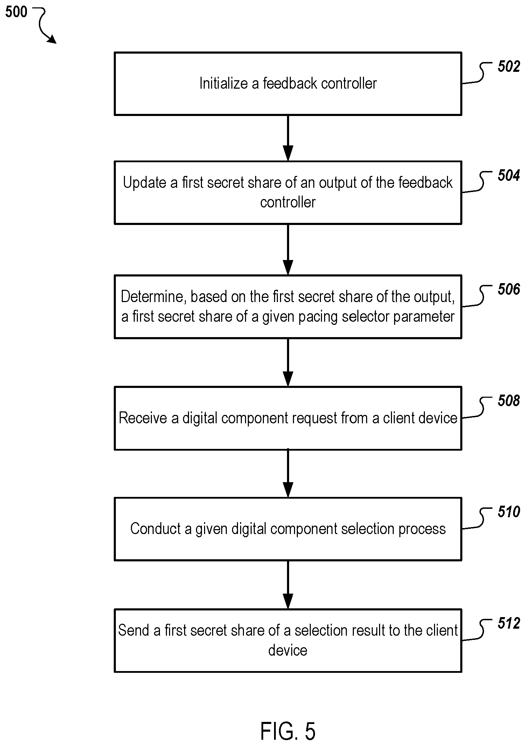

FIG. 5 is a flow diagram that illustrates an example process 500 for selecting a digital component for distribution to a client device. Operations of the process 500 can be implemented, for example, by the computing system $MPC_1$ or the computing system $MPC_2$ of the MPC cluster 130. Operations of the process 500 can also be implemented as instructions stored on one or more computer readable media which may be non-transitory, and execution of the instructions by one or more data processing apparatus can cause the one or more data processing apparatus to perform the operations of the process 500. For brevity, the process 500 is described as being performed by computing system $MPC_1$.

The computing system $MPC_1$ initializes, in collaboration with one or more second computing systems of the MPC systems (e.g., computing system $MPC_2$), a feedback controller for each of one or more campaigns in secret shares using a secure MPC process

(502). The feedback controller can be a PID controller having a setpoint based on a target rate for the given campaign. For example, the setpoint can be an impression rate, an interaction rate, or a resource depletion rate. The computing systems $MPC_1$ and $MPC_2$ can initialize secret shares of parameters of the controller using a secure MPC process, as described above with reference to FIG. 4.

The computing system $MPC_1$ updates a first secret share of an output of each feedback controller based on an error parameter for the feedback controller. The error parameter can represent a difference between the setpoint and a measured rate for the given campaign (504). The output represents a probability that can be used to determine whether the campaign satisfies pacing eligibility condition for the campaign. The computing systems $MPC_1$ and $MPC_2$ can update the output of the controller based on an updated measured process variable and the setpoint, as described above with reference to FIG. 4.

The computing system $MPC_1$ determines, based on a first secret share of the output, a first secret share of a given pacing selector parameter that defines whether the campaign satisfies a pacing eligibility condition for the campaign (506). As described above with reference to FIG. 4, the computing systems $MPC_1$ and $MPC_2$ can collaboratively generate a random number for each digital component request and compare the random number to the output to determine the pacing selector parameter.

The computing system $MPC_1$ receives, from a client device 110, a digital component request (508). The digital component request can include a cuckoo filter or secret shares of data identifying one or more first user groups that include a user of the client device 110 as a member. For example, the digital component request can include one or more distributed point functions. Each distributed point function can represent a secret share of a point function that indicates whether a user of the client device is a member of a respective first user group identified by a respective first user group identifier. For example, the digital component request received by computing system $MPC_1$ can include a distributed point function $g_{ug\_id,\ 1}$ for each user group that includes the user of the client device 110 as a member.

The computing system collaborates with computing system $MPC_2$ to conduct a given digital component selection process for the digital component request (510). For example, the computing systems $MPC_1$ and $MPC_2$ can perform the process 300 of FIG. 3 to generate a selection result that identifies a selected digital component.

The computing system $MPC_1$ provides, to the client device 110, a first secret share of the selection result identifying the given digital component (512). As described above, the selection result can identify the selected digital component and the selection value for the digital component. The client device 110 can also receive a respective secret share of the selection result from each of the one or more additional MPC systems, e.g., computing system $MPC_2$. The client device 110 can reconstruct the selection result using the secret shares, as described above.

In some implementations, rather than use distributed point functions, the cuckoo filter itself can be sent to the MPC cluster 130. In this example, the application 112 can use a pseudo random function (PRF) parameterized by either a user group identifier or an identifier from the set of blocked identifiers and either of two random variables generated by the application 112. For example, assume that the three random variables generated by the application 112 are *rand_varia*, *rand_var1b* and *rand_var2*. Also assume that each item in a bucket is a k-bit integer. In some implementations, the application 112 and the MPC cluster 130 agree on a PRF in advance, where k is the number of bits in each item in a bucket of the cuckoo filter. Each item in a bucket of the cuckoo filter can be occupied by a user group identifier or a blocked identifier, or empty. For example, the application 112 can generate a cuckoo filter table whose items are *PRF(ug_id, rand_var1a)*, *PRF(blocked_id, rand_var1b)*, or 0, where *ug_id* is the identifier of the user group generated by applying HMAC on the label (e.g., user group identifier) of the user group based on the domain of the content provider and 0 represents an empty item. The process is repeated on all user group identifiers and blocked identifiers.

The application 112 can generate a vector B based on a cuckoo filter table generated for the user group identifiers and blocked identifiers. Each value $B_i$ in the vector B can be represented as $B_i = (A_i \_PRF(rand\_var2, i))\ mod\ p$ where A is the cuckoo filter table and *i* is the index of the vector *B* and cuckoo filter table *A*. When the application 112 initiates a request for a digital component for a digital component slot, the application transmits *rand_var1a*, *rand var1b* and *rand_var2* as parameters of the request to computing system $MPC_1$. The application 112 also transmits the vector B, *rand_var1a* and *rand_var1b* as parameters of the request to computing system $MPC_2$. *PRF(rand_var2, i)* and $B_i$ are two additive secret shares of $A_i$ in $Z_p$, held by computing systems $MPC_1$ and $MPC_2$ respectively. Because neither of the computing systems $MPC_1$ and $MPC_2$ have access to both the secret shares, neither of the computing systems can recreate the cuckoo filter table, preserving user privacy.

The computing system MPC1 determines whether each candidate selection value is associated with a user group specified in the request. The computing system $MPC_1$ receives the equivalent of an array of secret shares for the cuckoo filter table M, denoted by $[M_1]$. Each user group identifier present in M will be in one of N possible locations.

The computing system $MPC_1$ calculates the user group-based candidate parameter $[is\_dc\_a\_candidate_{x,1}]$ according to relationship 40 below:

$$0 == \prod_{i=1}^{N}([M_{F_i(ug\_id(x)),1}] - PRF(ug\_id(x), rand\_val1a)) \quad \text{AND} \quad 0 \neq$$

$$\prod_{i=1}^{N}([M_{F_i(block\_id(x)),1}] - PRF(block\_id(x), rand\_val1b)) \tag{40}$$

where $\Pi$ denotes the multiplication of multiple items. Here, *ug_id(x)* is a function used to retrieve the user group identifier *ug_id* associated with a selection value x, $\{F_1,...F_N\}$ is a set of hash functions to calculate possible index of an item within the cuckoo filter table *A*, and *rand valla* is the random value received in the digital component request. $[M_{x,1}]$ is the x-th element in the array $[M_1]$. == is the equality test between a cleartext integer and a secret share of a secret integer. The result of == is a secret share of a secret integer that is either 0 (not equal) or 1 (equal). Here, the value of $[M_{i,1}] = [PRF(rand\_val2a,$

*i)*₁].

Similarly, computing system MPC₂ calculates user group-based candidate parameter [*is_dc_a_candidate*ₓ,₂] according to relationship 41 below:

$$0 == \prod_{i=1}^{N}\left(\left[M_{F_i(ug\_id(x)),2}\right] - PRF(ug\_id(x), rand\_val1a)\right) \text{ AND } \quad 0 \neq$$

$$\prod_{i=1}^{N}\left(\left[M_{F_i(block\_id(x)),2}\right] - PRF(block\_id(x), rand\_val1b)\right) \qquad (41)$$

Here, the value of $[M_{i,2}] = B_i$.

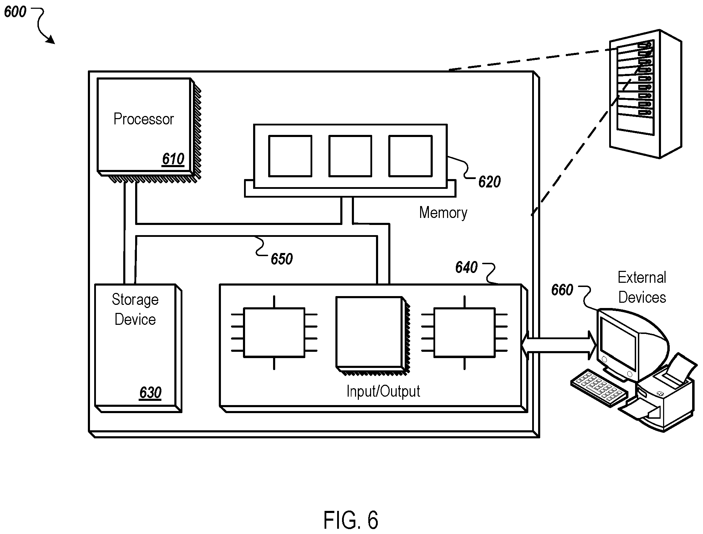

FIG. 6 is a block diagram of an example computer system 600 that can be used to perform operations described above. The system 600 includes a processor 610, a memory 620, a storage device 630, and an input/output device 640. Each of the components 610, 620, 630, and 640 can be interconnected, for example, using a system bus 650. The processor 610 is capable of processing instructions for execution within the system 600. In some implementations, the processor 610 is a single-threaded processor. In another implementation, the processor 610 is a multi-threaded processor. The processor 610 is capable of processing instructions stored in the memory 620 or on the storage device 630.

The memory 620 stores information within the system 600. In one implementation, the memory 620 is a computer-readable medium. In some implementations, the memory 620 is a volatile memory unit. In another implementation, the memory 620 is a non-volatile memory unit.

The storage device 630 is capable of providing mass storage for the system 600. In some implementations, the storage device 630 is a computer-readable medium. In various different implementations, the storage device 630 can include, for example, a hard disk device, an optical disk device, a storage device that is shared over a network by multiple computing devices (e.g., a cloud storage device), or some other large capacity storage device.

The input/output device 640 provides input/output operations for the system 600. In some implementations, the input/output device 640 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to external devices 660, e.g., keyboard, printer and display devices. Other implementations, however, can also be used, such as mobile computing devices, mobile communication devices, set-top box television client devices, etc.

Although an example processing system has been described in FIG. 6, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage media (or medium) for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an internetwork (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

In addition to the embodiments described above, the following embodiments are also innovative:

Embodiment 1 is a method including for each of one or more campaigns: initializing, by a first computing system of a plurality of multi-party computation (MPC) systems and in collaboration with one or more second computing systems of the MPC systems, a feedback controller for the campaign in secret shares using a secure MPC process, wherein the feedback controller comprises a setpoint based on a target rate for the campaign; updating, by the first computing system, a first secret share of an output of the feedback controller based on an error parameter representing a difference between the setpoint and a measured rate for the campaign; and determining, by the first computing system

26

and based at least on the first secret share of the output, a first secret share of a pacing selector parameter that defines whether the campaign satisfies a pacing eligibility condition for the campaign; receiving, by the first computing system, a digital component request; conducting, by the first computing system in collaboration with the one or more second computing systems, a given digital component selection process for the digital component request, wherein the digital component selection process selects a given digital component from a set of candidate digital components that each satisfy one or more eligibility conditions including being in an eligible campaign that satisfies the pacing eligibility condition; and sending, by the first computing system and to the client device, a first secret share of a selection result that identifies the given digital component.

Embodiment 2 is the method of embodiment 1, wherein the target rate for the campaign comprises one of a target impression rate for the campaign, a target user interaction rate for the given campaign, or a target resource depletion rate for the given campaign.

Embodiment 3 is the method of embodiment 1 or 2, wherein the feedback controller comprises a proportional-integral-derivative (PID) controller.

Embodiment 4 is the method of any one of embodiments 1-3, wherein the digital component request comprises secret shares of data identifying one or more first user groups that include a user of the client device as a member.

Embodiment 5 is the method of embodiment 4, wherein conducting, by the first computing system and in collaboration with the one or more second computing systems, the given digital component selection process for the digital component request comprises: identifying a plurality of digital components, wherein each digital component corresponds to (i) a respective selection value, (ii) a respective second user group identifier for a respective second user group to which the digital component is eligible to be distributed, and (iii) a respective campaign that includes the digital component; for each selection value in the plurality of selection values, determining a first secret share of an overall candidate parameter that indicates whether (i) the second user group identifier corresponding to the selection value matches one of the one or more first user groups and (ii) the pacing selector parameter for the respective campaign indicates that the respective campaign satisfies the pacing eligibility condition for the respective campaign; and generating, based on the respective selection value for each of the plurality of digital components and the candidate parameters, the first secret share of the selection result, wherein the given digital component is a particular digital component, from the set of eligible digital components, having a highest selection value.

Embodiment 6 is the method of embodiment 5, wherein each eligible digital component is a digital component for which the overall candidate parameter has a specified value, wherein the specified value indicates that (i) the second user group identifier corresponding to the digital component matches one of the one or more first user groups and that (ii) respective pacing selector parameter for the campaign that includes the digital component indicates that the campaign satisfies the pacing eligibility condition.

Embodiment 7 is the method of any one of embodiments 1-6, wherein generating the first secret share of the selection result comprises: generating an order of the plurality of digital components based on a magnitude of each selection value; determining, based on the order of the digital components and the overall candidate parameter for each digital component, a first secret share of an accumulated value for each selection value; determining, for each digital component, a first secret share of a winner parameter based on (i) the overall candidate parameter for the selection value and (ii) a result of an equality test that indicates whether the accumulated value for the selection value is a particular specified value; and determining, as the first secret share of the selection result, a first secret share of a sum of, for each selection value, a product of the winner parameter for the selection value and a digital component information element for the selection value.

Embodiment 8 is the method of embodiment 7, wherein determining the first secret share of the accumulated value for each selection value comprises: for each individual selection value, determining a quantity of selection values, between a highest selection value and the individual selection value inclusive, that have a candidate parameter that indicates that the second user group identifier corresponding to the selection value matches at least one of the one or more first user group identifiers.

Embodiment 9 is the method of embodiment 7 or 8, wherein the particular specified value is one or logical true.

Embodiment 10 is the method of any one of embodiments 7-9, further comprising: storing the first secret share of the winner parameter with a reference to a selection process identifier for the given digital component selection process;

receiving a notification from the client device, the notification comprising the selection process identifier and a first secret share of data indicating at least one of (i) whether the given digital component was displayed at the client device or (ii) whether a user interacted with the given digital component; and updating, using the selection process identifier and the first secret share of the data indicating at least one of (i) whether the digital component was displayed at the client device or (ii) whether the user interacted with the given digital component, a first secret share of the measured rate for the feedback controller for a campaign that includes the given digital component.

Embodiment 11 is the method of embodiment 10, further comprising updating, in collaboration with the one or more second computing systems, the first secret share of the respective pacing selector parameter for the given campaign based on the updated first secret share of the measured rate and a respective second secret share of the measured rate maintained by each of the one or more second computing systems.

Embodiment 12 is the method of embodiment 11, wherein updating the first secret share of the respective pacing selector parameter for the given campaign comprises: updating, in collaboration with the one or more second computing systems, the first secret share of the output of the feedback controller for the given campaign; and updating, in collaboration with the one or more second computing systems, the first secret share of the pacing selector for the given campaign based on the updated first secret share of the output of the feedback controller for the given campaign and a respective updated second secret share of the output of the feedback controller for the given campaign maintained by each of the one or more second computing systems.

Embodiment 13 is a system comprising one or more processors; and one or more storage devices storing instructions that, when executed by the one or more processors, cause the one or more processor carry out the method of any one of embodiments 1 to 12.

Embodiment 14 is a computer readable storage medium carrying instructions that, when executed by one or more processors, cause the one or more processors to carry out the method of any one of embodiments 1 to 12.

Embodiment 15 is a computer program product comprising instructions which, when executed by a computer, cause the computer to carry out the steps of the method of any of embodiments 1 to 12.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Aspects of the present disclosure are now described in the following numbered paragraphs:

1. A computer-implemented method comprising:

for each of one or more campaigns:

initializing, by a first computing system of a plurality of multi-party computation (MPC) systems and in collaboration with one or more second computing systems of the MPC systems, a feedback controller for the campaign in secret shares using a secure MPC process, wherein the feedback controller comprises a setpoint based on a target rate for the campaign;

updating, by the first computing system, a first secret share of an output of the feedback controller based on an error parameter representing a difference between the setpoint and a measured rate for the campaign; and

determining, by the first computing system and based at least on the first secret share of the output, a first secret share of a pacing selector parameter that defines whether the campaign satisfies a pacing eligibility condition for the campaign;

receiving, by the first computing system, a digital component request;

conducting, by the first computing system in collaboration with the one or more second computing systems, a given digital component selection process for the digital component request, wherein the digital component selection process selects a given digital component from a set of candidate digital components that each satisfy one or more eligibility conditions including being in an eligible campaign that satisfies the pacing eligibility condition; and

sending, by the first computing system and to the client device, a first secret share of a selection result that identifies the given digital component.

2. The computer-implemented method of numbered paragraph 1, wherein the target rate for the campaign comprises one of a target impression rate for the campaign, a target user interaction rate for the given campaign, or a target resource depletion rate for the given campaign.

3. The computer-implemented method of numbered paragraph 1 or 2, wherein the feedback controller comprises a proportional-integral-derivative (PID) controller.

4. The computer-implemented method of any preceding numbered paragraph, wherein the digital component request comprises secret shares of data identifying one or more first user groups that include a user of the client device as a member.

5. The computer-implemented method of numbered paragraph 4, wherein conducting, by the first computing system and in collaboration with the one or more second computing systems, the given digital component selection process for the digital component request comprises:

identifying a plurality of digital components, wherein each digital component corresponds to (i) a respective selection value, (ii) a respective second user group identifier for a respective second user group to which the digital component is eligible to be distributed, and (iii) a respective campaign that includes the digital component;

for each selection value in the plurality of selection values, determining a first secret share of an overall candidate parameter that indicates whether (i) the second user group identifier corresponding to the selection value matches one of the one or more first user groups and (ii) the pacing selector parameter for the respective campaign indicates that the respective campaign satisfies the pacing eligibility condition for the respective campaign; and

generating, based on the respective selection value for each of the plurality of digital components and the candidate parameters, the first secret share of the selection result, wherein the given digital component is a particular digital component, from the set of eligible digital components, having a highest selection value.

6. The computer-implemented method of numbered paragraph 5, wherein each eligible digital component is a digital component for which the overall candidate parameter has a specified value, wherein the specified value indicates that (i) the second user group identifier corresponding to the digital component matches one of the one or more first user groups and that (ii) respective pacing selector parameter for the campaign that includes the digital component indicates that the campaign satisfies the pacing eligibility condition.

7. The computer-implemented method of any preceding numbered paragraph, wherein generating the first secret share of the selection result comprises:

generating an order of the plurality of digital components based on a magnitude of each selection value;

determining, based on the order of the digital components and the overall candidate parameter for each digital component, a first secret share of an accumulated value for each selection value;

determining, for each digital component, a first secret share of a winner parameter based on (i) the overall candidate parameter for the selection value and (ii) a result of an equality test that indicates whether the accumulated value for the selection value is a particular specified value; and

determining, as the first secret share of the selection result, a first secret share of a sum of, for each selection value, a product of the winner parameter for the selection value and a digital component information element for the selection value.

8. The computer-implemented method of numbered paragraph 7, wherein determining the first secret share of the accumulated value for each selection value comprises:

for each individual selection value, determining a quantity of selection values, between a highest selection value and the individual selection value inclusive, that have a candidate parameter that indicates that the second user group identifier corresponding to the selection value matches at least one of the one or more first user group identifiers.

9. The computer-implemented method of numbered paragraph 7 or 8, wherein the particular specified value is one or logical true.

10. The computer-implemented method of any one of numbered paragraphs 7 to 9, further comprising: storing the first secret share of the winner parameter with a reference to a selection process identifier for the given digital component selection process;

receiving a notification from the client device, the notification comprising the selection process identifier and a first secret share of data indicating at least one of (i) whether the given digital component was displayed at the client device or (ii) whether a user interacted with the given digital component; and

updating, using the selection process identifier and the first secret share of the data indicating at least one of (i) whether the digital component was displayed at the client device or (ii) whether the user interacted with the given digital component, a first secret share of the measured rate for the feedback controller for a campaign that includes the given digital component.

11. The computer-implemented method of numbered paragraph 10, further comprising updating, in collaboration with the one or more second computing systems, the first secret share of the respective pacing selector parameter for the given campaign based on the updated first secret share of the measured rate and a respective second secret share of the measured rate maintained by each of the one or more second computing systems.

12. The computer-implemented method of numbered paragraph 11, wherein updating the first secret share of the respective pacing selector parameter for the given campaign comprises:

updating, in collaboration with the one or more second computing systems, the first secret share of the output of the feedback controller for the given campaign; and

updating, in collaboration with the one or more second computing systems, the first secret share of the pacing selector for the given campaign based on the updated first secret share of the output of the feedback controller for the given campaign and a respective updated second secret share of the output of the feedback controller for the given campaign maintained by each of the one or more second computing systems.

13. A system comprising:
one or more processors; and
one or more storage devices storing instructions that, when executed by the one or more processors, cause the one or more processor to carry out the method of any preceding numbered paragraph.

14. A computer readable storage medium carrying instructions that, when executed by one or more processors, cause the one or more processors to carry out the method of any one of numbered paragraphs 1 to 12.

15. A computer program product comprising instructions which, when executed by a computer, cause the computer to carry out the steps of the method of any of numbered paragraphs 1 to 12.

16. A system, comprising:

one or more processors; and
one or more computer-readable media storing instructions that, when executed by the one or more processors, cause the one or more processors to perform operations comprising: for each of one or more campaigns:

initializing, by a first computing system of a plurality of multi-party computation (MPC) systems and in collaboration with one or more second computing systems of the MPC systems, a feedback controller for the campaign in secret shares using a secure MPC process, wherein the feedback controller comprises a setpoint based on a target rate for the campaign;

updating, by the first computing system, a first secret share of an output of the feedback controller based on an error parameter representing a difference between the setpoint and a measured rate for the campaign; and

determining, by the first computing system and based at least on the first secret share of the output, a first secret share of a pacing selector parameter that defines whether the campaign satisfies a pacing eligibility condition for the campaign;

receiving, by the first computing system, a digital component request;

conducting, by the first computing system in collaboration with the one or more second computing systems, a given digital component selection process for the digital component request, wherein the digital component selection process selects a given digital component from a set of candidate digital components that each satisfy one or more eligibility conditions including being in an eligible campaign that satisfies the pacing eligibility condition; and

sending, by the first computing system and to the client device, a first secret share of a selection result that identifies the given digital component.

17. The system of numbered paragraph 16, wherein the target rate for the campaign comprises one of a target impression rate for the campaign, a target user interaction rate for the given campaign, or a target resource depletion rate for the given campaign.

18. The system of numbered paragraph 16, wherein the feedback controller comprises a proportional-integral-derivative (PID) controller.

19. The system of numbered paragraph 16, wherein the digital component request comprises secret shares of data identifying one or more first user groups that include a user of the client device as a member.

20. The system of numbered paragraph 19, wherein conducting, by the first computing system and in collaboration with the one or more second computing systems, the given digital component selection process for the digital component request comprises:

identifying a plurality of digital components, wherein each digital component corresponds to (i) a respective selection value, (ii) a respective second user group identifier for a respective second user group to which the digital component is eligible to be distributed, and (iii) a respective campaign that includes the digital component;

for each selection value in the plurality of selection values, determining a first secret share of an overall candidate parameter that indicates whether (i) the second user group identifier corresponding to the selection value matches one of the one or more first user groups and (ii) the pacing selector parameter for the respective campaign indicates that the respective campaign satisfies the pacing eligibility condition for the respective campaign; and

generating, based on the respective selection value for each of the plurality of digital components and the candidate parameters, the first secret share of the selection result, wherein the given digital component is a particular digital component, from the set of eligible digital components, having a highest selection value.

21. The system of numbered paragraph 20, wherein each eligible digital component is a digital component for which the overall candidate parameter has a specified value, wherein the specified value indicates that (i) the second user group identifier corresponding to the digital component matches one of the one or more first user groups and that (ii) respective pacing selector parameter for the campaign that includes the digital component indicates that the campaign satisfies the pacing eligibility condition.

22. The system of numbered paragraph 16, wherein generating the first secret share of the selection result comprises:

generating an order of the plurality of digital components based on a magnitude of each selection value;

determining, based on the order of the digital components and the overall candidate parameter for each digital component, a first secret share of an accumulated value for each selection value;

determining, for each digital component, a first secret share of a winner parameter based on (i) the overall candidate parameter for the selection value and (ii) a result of an equality test that indicates whether the accumulated value for the selection value is a particular specified value; and

determining, as the first secret share of the selection result, a first secret share of a sum of, for each selection value, a product of the winner parameter for the selection value and a digital component information element for the selection value.

23. The system of numbered paragraph 22, wherein determining the first secret share of the accumulated value for each selection value comprises:

for each individual selection value, determining a quantity of selection values, between a highest selection value and the individual selection value inclusive, that have a candidate parameter that indicates that the second user group identifier corresponding to the selection value matches at least one of the one or more first user group identifiers.

24. The system of numbered paragraph 22, wherein the particular specified value is one or logical true.

25. The system of numbered paragraph 22, wherein the operations comprise:

storing the first secret share of the winner parameter with a reference to a selection process identifier for the given digital component selection process;

receiving a notification from the client device, the notification comprising the selection process identifier and a first secret share of data indicating at least one of (i) whether the given digital component was presented at the client device or (ii) whether a user interacted with the given digital component; and

updating, using the selection process identifier and the first secret share of the data indicating at least one of (i) whether the digital component was presented at the client device or (ii) whether the user interacted with the given digital component, a first secret share of the measured rate for the feedback controller for a campaign that includes the given digital component.

26. The system of numbered paragraph 25, wherein the operations comprise updating, in collaboration with the one or more second computing systems, the first secret share of the respective pacing selector parameter for the given campaign based on the updated first secret share of the measured rate and a respective second secret share of the measured rate maintained by each of the one or more second computing systems.

27. The system of numbered paragraph 26, wherein updating the first secret share of the respective pacing selector parameter for the given campaign comprises:

updating, in collaboration with the one or more second computing systems, the first secret share of the output of the feedback controller for the given campaign; and

updating, in collaboration with the one or more second computing systems, the first secret share of the pacing selector for the given campaign based on the updated first secret share of the output of the feedback controller for the given campaign and a respective updated second secret share of the output of the feedback controller for the given campaign maintained by each of the one or more second computing systems.

28. One or more non-transitory computer-readable media storing instructions that, when executed by one or more computers, cause the one or more computers to perform operations comprising:

for each of one or more campaigns:

initializing, by a first computing system of a plurality of multi-party computation (MPC) systems and in collaboration with one or more second computing systems of the MPC systems, a feedback controller for the campaign in secret shares using a secure MPC process, wherein the feedback controller comprises a setpoint based on a target rate for the campaign;

updating, by the first computing system, a first secret share of an output of the feedback controller based on an error parameter representing a difference between the setpoint and a measured rate for the campaign; and

determining, by the first computing system and based at least on the first secret share of the output, a first secret share of a pacing selector parameter that defines whether the campaign satisfies a pacing eligibility condition for the campaign;

receiving, by the first computing system, a digital component request;

conducting, by the first computing system in collaboration with the one or more second computing systems, a given digital component selection process for the digital component request, wherein the digital component selection process selects a given digital component from a set of candidate digital components that each satisfy one or more eligibility conditions including being in an eligible campaign that satisfies the pacing eligibility condition; and

sending, by the first computing system and to the client device, a first secret share of a selection result that identifies the given digital component.

29. The one or more non-transitory computer-readable media of numbered paragraph 28, wherein the target rate for the campaign comprises one of a target impression rate for the campaign, a target user interaction rate for the given campaign, or a target resource depletion rate for the given campaign.

30. The one or more non-transitory computer-readable media of numbered paragraph 28, wherein the feedback controller comprises a proportional-integral-derivative (PID) controller.

31. The one or more non-transitory computer-readable media of numbered paragraph 28, wherein the digital component request comprises secret shares of data identifying one or more first user groups that include a user of the client device as a member.

32. The one or more non-transitory computer-readable media of numbered paragraph 31, wherein conducting, by the first computing system and in collaboration with the one or more second computing systems, the given digital component selection process for the digital component request comprises:

identifying a plurality of digital components, wherein each digital component corresponds to (i) a respective selection value, (ii) a respective second user group identifier for a respective second user group to which the digital component is eligible to be distributed, and (iii) a respective campaign that includes the digital component;

for each selection value in the plurality of selection values, determining a first secret share of an overall candidate parameter that indicates whether (i) the second user group identifier corresponding to the selection value matches one of the one or more first user groups and (ii) the pacing selector parameter for the respective campaign indicates that the respective campaign satisfies the pacing eligibility condition for the respective campaign; and

generating, based on the respective selection value for each of the plurality of digital components and the candidate parameters, the first secret share of the selection result, wherein the given digital component is a particular digital component, from the set of eligible digital components, having a highest selection value.

33. The one or more non-transitory computer-readable media of numbered paragraph 32, wherein each eligible digital component is a digital component for which the overall candidate parameter has a specified value, wherein the specified value indicates that (i) the second user group identifier corresponding to the digital component matches one of the one or more first user groups and that (ii) respective pacing selector parameter for the campaign that includes the digital component indicates that the campaign satisfies the pacing eligibility condition.

34. The one or more non-transitory computer-readable media of numbered paragraph 28, wherein generating the first secret share of the selection result comprises:

generating an order of the plurality of digital components based on a magnitude of each selection value;

determining, based on the order of the digital components and the overall candidate parameter for each digital component, a first secret share of an accumulated value for each selection value;

determining, for each digital component, a first secret share of a winner parameter based on (i) the overall candidate parameter for the selection value and (ii) a result of an equality test that indicates whether the accumulated value for the selection value is a particular specified value; and

determining, as the first secret share of the selection result, a first secret share of a sum of, for each selection value, a product of the winner parameter for the selection value and a digital component information element for the selection value.

35. The one or more non-transitory computer-readable media of numbered paragraph 34, wherein determining the first secret share of the accumulated value for each selection value comprises:
for each individual selection value, determining a quantity of selection values, between a highest selection value and the individual selection value inclusive, that have a candidate parameter that indicates that the second user group identifier corresponding to the selection value matches at least one of the one or more first user group identifiers.

36. The one or more non-transitory computer-readable media of numbered paragraph 34, wherein the particular specified value is one or logical true.

37. The one or more non-transitory computer-readable media of numbered paragraph 34, wherein the operations comprise:

storing the first secret share of the winner parameter with a reference to a selection process identifier for the given digital component selection process;

receiving a notification from the client device, the notification comprising the selection process identifier and a first secret share of data indicating at least one of (i) whether the given digital component was presented at the client device or (ii) whether a user interacted with the given digital component; and

updating, using the selection process identifier and the first secret share of the data indicating at least one of (i) whether the digital component was presented at the client device or (ii) whether the user interacted with the given digital component, a first secret share of the measured rate for the feedback controller for a campaign that includes the given digital component.

38. The one or more non-transitory computer-readable media of numbered paragraph 37, wherein the operations comprise updating, in collaboration with the one or more second computing systems, the first secret share of the respective pacing selector parameter for the given campaign based on the updated first secret share of the measured rate and a respective second secret share of the measured rate maintained by each of the one or more second computing systems.

39. The one or more non-transitory computer-readable media of numbered paragraph 38, wherein updating the first secret share of the respective pacing selector parameter for the given campaign comprises:

updating, in collaboration with the one or more second computing systems, the first secret share of the output of the feedback controller for the given campaign; and

updating, in collaboration with the one or more second computing systems, the first secret share of the pacing selector for the given campaign based on the updated first secret share of the output of the feedback controller for the given campaign and a respective updated second secret share of the output of the feedback controller for the given campaign maintained by each of the one or more second computing systems.

**Claims**

1. A computer-implemented method comprising:

for each of one or more campaigns:

initializing, by a first computing system of a plurality of multi-party computation (MPC) systems and in collaboration with one or more second computing systems of the MPC systems, a feedback controller for the campaign in secret shares using a secure MPC process, wherein the feedback controller comprises a setpoint based on a target rate for the campaign, wherein each MPC system maintains parameters of the feedback controller in secret shares that encrypt the parameters, wherein the parameters comprise a measured rate, an output parameter, and an error parameter;

updating, by the first computing system and using a secure MPC protocol in collaboration with each of the one or more second computing systems, a first secret share of the output parameter of the feedback controller based on the error parameter representing a difference between the setpoint and the measured rate for the campaign; and

determining, by the first computing system and based at least on the first secret share of the output parameter, a first secret share of a pacing selector parameter that defines whether the campaign satisfies a pacing eligibility condition for the campaign;

receiving, by the first computing system and from a client device, a digital component request;

conducting, by the first computing system in collaboration with the one or more second computing systems, a given digital component selection process for the digital component request, wherein the digital component selection process selects a given digital component from a set of candidate digital components that each satisfy one or more eligibility conditions including being in an eligible campaign that satisfies the pacing eligibility condition; and

sending, by the first computing system and to the client device, a first secret share of a selection result that identifies the given digital component.

2. The computer-implemented method of claim 1, further comprising updating a first secret share of the measured rated for the campaign based on a secret share of an obtained notification parameter indicating at least one of (i) whether a digital component of the campaign was selected for presentation or (ii) interacted with by a user after being selected for presentation, wherein updating the first secret share of the output parameter of the feedback controller based on the error parameter comprises updating the first secret share of the output parameter of the feedback controller based on a first secret share of the error parameter and the first secret share of the measured rate for the campaign.

3. The computer-implemented method of claim 1 or 2, wherein the target rate for the campaign comprises one of a target impression rate for the campaign, a target user interaction rate for the campaign, or a target resource depletion rate for the campaign.

34

4. The computer-implemented method of any preceding claim, wherein the feedback controller comprises a proportional-integral-derivative (PID) controller.

5. The computer-implemented method of any preceding claim, wherein:

   the digital component request comprises secret shares of data identifying one or more first user groups that include a user of the client device as a member; and
   the digital component selection process selects a given digital component from the set of candidate digital components based on the secret shares of the data identifying one or more first user groups that include a user of the client device as a member.

6. The computer-implemented method of claim 5, wherein conducting, by the first computing system and in collaboration with the one or more second computing systems, the given digital component selection process for the digital component request comprises:

   identifying a plurality of digital components, wherein each digital component corresponds to (i) a respective selection value, (ii) a respective second user group identifier for a respective second user group to which the digital component is eligible to be distributed, and (iii) a respective campaign that includes the digital component;
   for each digital component in the plurality of digital components, determining a first secret share of an overall candidate parameter that indicates whether (i) the second user group identifier corresponding to the digital component, matches one of the one or more first user groups and (ii) the pacing selector parameter for the respective campaign indicates that the respective campaign satisfies the pacing eligibility condition for the respective campaign; and
   generating, based on the respective selection value for each of the plurality of digital components and the candidate parameters, the first secret share of the selection result, wherein the given digital component is a particular digital component, from the set of eligible digital components, having a highest selection value.

7. The computer-implemented method of claim 6, wherein each eligible digital component is a digital component for which the overall candidate parameter has a specified value, wherein the specified value indicates that (i) the second user group identifier corresponding to the digital component matches one of the one or more first user groups and that (ii) respective pacing selector parameter for the campaign that includes the digital component indicates that the campaign satisfies the pacing eligibility condition.

8. The computer-implemented method of claim 6, wherein generating the first secret share of the selection result comprises:

   generating an order of the plurality of digital components based on a magnitude of each selection value;
   determining, based on the order of the digital components and the overall candidate parameter for each digital component, a first secret share of an accumulated value for each selection value;
   determining, for each digital component, a first secret share of a winner parameter based on (i) the overall candidate parameter for the selection value and (ii) a result of an equality test that indicates whether the accumulated value for the selection value is a particular specified value; and
   determining, as the first secret share of the selection result, a first secret share of a sum of, for each selection value, a product of the winner parameter for the selection value and a digital component information element for the selection value.

9. The computer-implemented method of claim 8, wherein determining the first secret share of the accumulated value for each selection value comprises:
   for each individual selection value, determining a quantity of selection values, between a highest selection value and the individual selection value inclusive, that have a candidate parameter that indicates that the second user group identifier corresponding to the selection value matches at least one of the one or more first user group identifiers.

10. The computer-implemented method of claim 8, wherein the particular specified value is one or logical true.

11. The computer-implemented method of claim 8, further comprising:

   storing the first secret share of the winner parameter with a reference to a selection process identifier for the given digital component selection process;

receiving a notification from the client device, the notification comprising the selection process identifier and a first secret share of data indicating at least one of (i) whether the given digital component was displayed at the client device or (ii) whether a user interacted with the given digital component; and

updating, using the selection process identifier and the first secret share of the data indicating at least one of (i) whether the digital component was displayed at the client device or (ii) whether the user interacted with the given digital component, a first secret share of the measured rate for the feedback controller for a campaign that includes the given digital component.

12. The computer-implemented method of claim 11, further comprising updating, in collaboration with the one or more second computing systems, the first secret share of the respective pacing selector parameter for the given campaign based on the updated first secret share of the measured rate and a respective second secret share of the measured rate maintained by each of the one or more second computing systems.

13. The computer-implemented method of claim 12, wherein updating the first secret share of the respective pacing selector parameter for the given campaign comprises:

updating, in collaboration with the one or more second computing systems, the first secret share of the output parameter of the feedback controller for the given campaign; and

updating, in collaboration with the one or more second computing systems, the first secret share of the pacing selector for the given campaign based on the updated first secret share of the output parameter of the feedback controller for the given campaign and a respective updated second secret share of the output parameter of the feedback controller for the given campaign maintained by each of the one or more second computing systems.

14. A system (600) comprising:

one or more processors (610); and

one or more storage devices (630) storing instructions that, when executed by the one or more processors (610), cause the one or more processors (610) to carry out the method of any preceding claim.

15. A computer readable storage medium carrying instructions that, when executed by one or more processors, cause the one or more processors to carry out the method of any one of claims 1 to 13.

FIG. 1

EP 4 550 244 A2

200

Client Device
**110**

Secure MPC
Cluster
**130**

DSP
**150**

Provide selection values **202**

Receive content **204**

Identify a set of user group
identifiers **206**

Generate probabilistic data
structure **208**

Generate distributed point
functions **210**

Transmit digital component
requests that include the
distributed point functions **212**

Select a digital component
using a secure MPC process
**214**

Transmit secret shares of
selection result and selection
process identifier **216**

Determine digital component
corresponding to result **218**

Display a digital component
**220**

Transmit event notification(s)
**222**

Update process variable(s) for
campaigns **224**

FIG. 2

300

**MPC₁**

**MPC₂**

Identify eligible digital components *302*

Identify eligible digital components *304*

For each eligible digital component, determine whether the selection value is a candidate *306*

Order the selection values for the digital components *308*

Order the selection values for the digital components *310*

Determine secret shares of an accumulated value for each candidate digital component based on the order *312*

Determine, for each candidate digital component, secret shares of a result that indicates whether the accumulated value equals a specified value *314*

Determine, for each candidate digital components, secret shares of a winner parameter *316*

Create a selection process identifier *318*

Create a selection process identifier *320*

Store secret shares of winner parameters keyed by nonce *322*

Store secret shares of winner parameters keyed by nonce *324*

Determine secret shares of a selection result *326*

Send secret share of selection result and selection process identifier *328*

Send secret share of selection result and selection process identifier *330*

FIG. 3

400

| MPC$_1$ | | MPC$_2$ |
|---|---|---|
| Receive tuning parameters 402 | | Receive tuning parameters 404 |
| Receive setpoint data 406 | | Receive setpoint data 408 |
| Initialize PID controller 410 | | |
| Update measured variable 412 | | Update measured variable 414 |
| Determine secret shares of controller parameters 416 | | |
| Determine secret shares of pacing selector parameter 418 | | |

FIG. 4

500 ⌐

| Initialize a feedback controller | 502 |

↓

| Update a first secret share of an output of the feedback controller | 504 |

↓

| Determine, based on the first secret share of the output, a first secret share of a given pacing selector parameter | 506 |

↓

| Receive a digital component request from a client device | 508 |

↓

| Conduct a given digital component selection process | 510 |

↓

| Send a first secret share of a selection result to the client device | 512 |

FIG. 5

FIG. 6

EP 4 550 244 A2